# EUROPEAN PATENT APPLICATION

(11) **EP 3 301 930 A1**
(43) Date of publication of application: **04.04.2018**
(21) Application number: 16306268.0
(22) Date of filing: 30.09.2016
(51) Int. Cl.: H04N 19/597, H04N 19/52, H04N 19/513

(54) **METHOD AND APPARATUS FOR ENCODING AND DECODING AN OMNIDIRECTIONAL VIDEO**

(71) Applicant: Thomson Licensing, 92130 Issy-les-Moulineaux (FR)
(72) Inventor: GALPIN, Franck, 35576 CESSON-SEVIGNE (FR); POIRIER, Tangi, 35576 CESSON-SEVIGNE (FR); URBAN, Fabrice, 35576 CESSON-SEVIGNE (FR)
(74) Representative: Huchet, Anne

(57) **Abstract**

A method for video encoding and corresponding apparatus are disclosed. For at least one current block of a picture, at least one motion vector predictor for said current block is adjusted, based on a relation between a first format in which the picture is represented and a second format in which the picture is to be rendered, and the current block is encoded using the adjusted motion vector predictor. Corresponding method and apparatus for video decoding are also disclosed.

## Description

### 1. Technical field

A method and an apparatus for coding a picture into a bitstream wherein said picture is representative of an omnidirectional video projected onto one or more pictures, are disclosed. Corresponding decoding method and apparatus are further disclosed.

### 2. Background

Recently there has been a growth of available large field-of-view content (up to 360°). Such content is potentially not fully visible by a user watching the content on immersive display devices such as Head Mounted Displays (HMD), smart glasses, PC screens, tablets, smartphones and the like. That means that at a given moment, a user may only be viewing a part of the content. However, a user can typically navigate within the content by various means such as head movement, mouse movement, touch screen, voice and the like. It is typically desirable to encode and decode this content.

### 3. Summary

According to an aspect of the present principle, a method for video encoding is disclosed. Such a method comprises, for at least one current block of a picture:
adjusting at least one motion vector predictor for said current block, based on a relation between a first format in which the picture is represented and a second format in which the picture is to be rendered; and
encoding said current block using said adjusted motion vector predictor.

The present disclosure allows taking into account a relation between the picture to encode and the format onto which the picture is to be rendered for adjusting a motion vector predictor used for encoding a block of the picture. Therefore, the motion vector predictor is more suitable for encoding the current block using motion-compensated mode for instance. Compression efficiciency is thus improved.

According to another apsect of the disclosure, a method for decoding a video is disclosed. Such a method comprises, for at least one current block of a picture:
adjusting at least one motion vector predictor for said current block, based on a relation between a first format in which the picture is represented and a second format in which the picture is to be rendered; and
decoding said current block using said adjusted motion vector predictor.

According to an embodiment of the present disclosure, the relation between said first format and said second format is determined according to a look-up table comprising correspondances between motion vectors for a plurality of locations in said first format in which said picture is represented and motion vectors in a plurality of corresponding locations in said second format in which the picture is to be rendered. Thus, computational complexity is reduced.

According to another embodiment of the present disclosure, the video is an omnidirectional video and the picture is representative of a 2D projection of said video.

According to another embodiment of the present disclosure, the relation between said first format and said second format uses at least said projection of said omnidirectional video onto said picture. This embodiment allows taking into account the distortions introduced by the projection function used to project a 3D surface representing an image of an omnidirectional video onto a 2D picture to determine a motion vector predictor for a current block.

According to another embodiment of the present disclosure, adjusting at least one motion vector predictor for said current block comprises:
computing in a projection space a displacement of at least one point of said current block using said motion vector predictor, obtaining a displaced point in the projection space,
projecting onto the picture said displaced point,
computing said adjusted motion vector predictor as a difference between a location on the picture of said projected displaced point and said point of said current block.

According to this embodiment, the motion vector predictor applied to a point of the current block to encode in a projection space. The displaced point is then projected on the picture for computing the motion vector predictor which is suitable for the current block. According to this embodiment, the distortion introducted by the projection of the 3D surface onto the picture is applied to the motion vector predictor used to code a current block. Therefore, the resulting motion vector predictor is closer to the apparent motion of the current block.

According to another embodiment of the present disclosure, the motion vector predictor is a motion vector from a block in said picture, and adjusting at least one motion vector predictor for said current block further comprises:
applying said motion vector predictor to an anchor point of said picture for obtaining a displaced anchor point,
projecting onto said projection space, said point of said current block, said anchor point and said displaced anchor point,
computing into said projection space, a projected motion vector predictor as a difference between said projected displaced anchor point and said projected anchor point, computing in a projection space a displacement of at least one point of said current block being performed using said projected motion vector predictor.

Such an embodiment allows taking into account the distortion introduced to the motion field by the projection function. In such an embodiment, the motion vector components are represented in the picture, therefore the prediction of motion vectors and of the current block information using motion-compensated prediction is easier as all prediction are performed in the encoding space, i.e. the 2D space.

According to another embodiment of the present disclosure, the anchor point belongs to a list comprising:
a first point being a center point of a neighbor block of said current block,
a second point being determined by a projection of said center point on an edge of said current block shared between said neighbor block and said current block,
a third point being determined by a translation of said first point for aligning said third point along a horizontal or vertical axis with a center point of said current block,
a fourth point being determined by projection of said third point on said shared edge,
a fifth point being determined as a point of the neighbor block being the closest point to said center of current block.

As the 2D image is a projection of a 3D surface, the motion is non-uniform in the blocks of the 2D image. Therefore, the choice of the point associated to the predictor block, so-called anchor point, to which the motion vector predictor is applied for determining an adjusted motion vector predictor impacts on the resulting adjusted motion vector predictor. The choice of the position of the anchor point regarding of the block to which the motion vector predictor is associated may be signalled in the bistream or may be determined in a same way both at encoder and decoder. Such a choice may depend on the type of the projection function and/or on the location in the picture of the block to which the motion vector predictor is associated, as the distortion in the picture may vary inside the picture.

According to another embodiment of the present disclosure, the projection space is a local rendered frame being a local plane tangent to the 3D surface.

According to another embodiment of the present disclosure, the projection space corresponds to a 3D surface representative of said omnidirectional video. This embodiment allows simplifying the derivation process of the adjusted motion vector predictor, by approximating the projection on the local rendered frame to a projection on the 3D surface. According to another embodiment of the present disclosure, the motion vector predictor is a motion vector which components are expressed on the 3D surface.

According to this embodiment, the adjusted motion vector predictor derivation process is simplified as the computation of the displacement is less complex in the 3D space than in the picture. However, according to this embodiment, the motion-compensation prediction process is more complex as it should be performed in the 2D space.

According to another embodiment of the present disclosure, the current block is partitionned into subblocks comprising one or more pixels, and encoding said current block using said adjusted motion vector predictor comprises:
computing a motion vector for each subblock of the current block using said adjusted motion vector predictor,
encoding each subblock of said current block using said motion vector computed for each subblock.

According to this embodiment, the distortion introduced in the motion field by the projection function is taken into account by deriving for each subblock of the current block a motion vector from the adjusted motion vector predictor. The prediction of the current block is thus improved as the motion vectors used to predict the datas of the current block are more suitable than a single motion vector applied for the whole block at the center of the block for instance.

According to another embodiment of the present disclosure, the current block is partitionned into subblocks comprising one ore more pixels, and decoding said current block using said adjusted motion vector predictor comprises:
computing a motion vector for each subblock of the current block using said adjusted motion vector predictor,
decoding each subblock of said current block using said motion vector computed for each subblock.

According to another embodiment of the present disclosure, the current block is partitionned into subblocks comprising one or more pixels, and said adjusting one motion vector predictor for said current block and said encoding are performed for each subblock of said current block using said motion vector predictor, obtaining for each subblock of said current block an adjusted motion vector predictor.

According to this embodiment, the distortion introduced in the motion field by the projection function is taken into account by deriving for each subblock of the current block an adjusted motion vector predictor according to the present principle. The prediction of the current block is thus improved as the motion vectors used to predict the datas of the current block are more suitable than a single motion vector applied for the whole block at the center of the block for instance.

According to another embodiment of the present disclosure, the current block is partitionned into subblocks comprising one or more pixels, and said adjusting one motion vector predictor for said current block and said decoding are performed for each subblock of said current block using said motion vector predictor, delivering for each subblock of said current block an adjusted motion vector predictor.

According to another embodiment of the present disclosure, when said motion vector predictor is a temporal motion vector predictor or when said motion vector predictor uses a reference frame different from a reference frame used by said current block, the disclosed encoding and/or decoding method further comprises scaling of said adjusted motion vector predictor using at least said projection function.

According to another embodiment of the present disclosure, the disclosed encoding and/or decoding method further comprises:
building a motion vector predictor list comprising at least said motion vector predictor,
said adjusting said motion vector predictor being performed for each motion vector predictor in the list, delivering a list of adjusted motion vector predictors,
pruning said list of adjusted motion vector predictors so as to remove identical adjusted motion vector predictors.

According to this embodiment, the pruning of the motion vector predictor is performed after rectification of the motion vector predictors so as to benefit from suitable motion vector predictors in the motion vector predictors list.

According to another aspect of the present principle, an apparatus for video encoding is disclosed. Such an apparatus comprises, for at least one current block of a picture:
means for adjusting at least one motion vector predictor for said current block based on a relation between a first format in which the picture is represented and a second format in which the picture is to be rendered; and
means for encoding said current block using said adjusted motion vector predictor.

According to another aspect of the present principle, an apparatus for decoding a video is disclosed. Such an apparatus comprises, for at least one current block of a picture:
means for adjusting at least one motion vector predictor for said current block, based on a relation between a first format in which the picture is represented and a second format in which the picture is to be rendered; and
means for decoding said current block using said adjusted motion vector predictor.

A bitstream representative of a coded video is also disclosed. Such a bitstream comprises coded data representative of at least one block of a picture of said video, and coded data representative of a look-up table comprising correspondances between pixels in a first format in which said picture is represented and pixels in a second format in which the picture is to be rendered, for adjusting at least one motion vector predictor for said at least one block.

According to another embodiment of the present disclosure, the bistream is stored on a non-transitory processor readable medium.

The present embodiments also provide an apparatus for transmitting the bitstream generated according to the methods described above.

An immersive rendering device comprising an apparatus for decoding a bitstream representative of a video is also disclosed.

A system for immersive rendering of an immersive video encoded into a bistream is also dislosed. Such a system comprises at least:
a network interface for receiving said bistream from a data network,
an apparatus for decoding said bitstream according to any one of the embodiments disclosed herein,
an immersive rendering device for rendering a decoded immersive video.

According to one implementation, the different steps of the method for encoding a video or for decoding a bistream representative of a video as described here above are implemented by one or more software programs or software module programs comprising software instructions intended for execution by a data processor of an apparatus for encoding a video or for decoding a bistream representative of a video, these software instructions being designed to command the execution of the different steps of the methods according to the present principles.

A computer program is also disclosed that is capable of being executed by a computer or by a data processor, this program comprising instructions to command the execution of the steps of a method for coding a video or of the steps of a method for decoding a bistream representative of a video as mentioned here above.

This program can use any programming language whatsoever and be in the form of source code, object code or intermediate code between source code and object code, such as in a partially compiled form or any other desirable form whatsoever.

The information carrier can be any entity or apparatus whatsoever capable of storing the program. For example, the carrier can comprise a storage means such as a ROM, for example a CD ROM or a microelectronic circuit ROM or again a magnetic recording means, for example a floppy disk or a hard disk drive.

Again, the information carrier can be a transmissible carrier such as an electrical or optical signal which can be conveyed via an electrical or optical cable, by radio or by other means. The program according to the present principles can be especially uploaded to an Internet type network.

As an alternative, the information carrier can be an integrated circuit into which the program is incorporated, the circuit being adjusted to executing or to being used in the execution of the methods in question.

According to one embodiment, the methods/apparatus may be implemented by means of software and/or hardware components. In this respect, the term "module" or "unit" can correspond in this document equally well to a software component and to a hardware component or to a set of hardware and software components.

A software component corresponds to one or more computer programs, one or more sub-programs of a program or more generally to any element of a program or a piece of software capable of implementing a function or a set of functions as described here below for the module concerned. Such a software component is executed by a data processor of a physical entity (terminal, server, etc) and is capable of accessing hardware resources of this physical entity (memories, recording media, communications buses, input/output electronic boards, user interfaces, etc).

In the same way, a hardware component corresponds to any element of a hardware unit capable of implementing a function or a set of functions as described here below for the module concerned. It can be a programmable hardware component or a component with an integrated processor for the execution of software, for example an integrated circuit, a smartcard, a memory card, an electronic board for the execution of firmware, etc.

### 4. Brief description of the drawings

Figure 1 illustrates an exemplary system for encoding and decoding omnidirectional videos, according to an embodiment of the present principles,
Figure 2A illustrates an example of projection from a spherical surface S onto a rectangular picture F,
Figure 2B illustrates an XY-plane reference system of a picture F,
Figure 2C illustrates an angular reference system on the sphere S,
Figure 3A illustrates an example of projection from a cubic surface S onto 6 pictures,
Figure 3B illustrates a cube reference system,
Figure 3C illustrates a re-arranged rectangular picture of the projected cube,
Figure 3D illustrates a layout of the six faces of a cube projected on a 2D picture,
Figure 4A illustrates a moving object in a projected picture F of a 3D surface representing an omnidirectionnal video,
Figure 4B illustrates corresponding motion vectors in a block partitionning of the projected picture,
Figure 5A illustrates a flow diagram for an exemplary method for encoding an omnidirectional video into a bitstream according to an embodiment of the present disclosure,
Figure 5B illustrates a flow diagram for an exemplary method for decoding an omnidirectional video into a bitstream according to an embodiment of the present disclosure,
Figure 6 illustrates a block BLK of the 2D picture to encode and a motion vector predictor available for encoding the block BLK,
Figure 7 illustrates a flow diagram for an exemplary method for adapting a motion vector predictor according to an embodiment of the present disclosure,
Figure 8A illustrates a projection from the frame coordinate system to a rendered frame used in the exemplary method for adapting a motion vector predictor illustated on figure 7,
Figure 8B illustrates a projection from the rendered frame to the frame coordinate system used in the exemplary method for adapting a motion vector predictor illustated on figure 7,
Figure 9A illustrates the displacement of the points on the sphere S and corresponding displacement on the rendered frame G,
Figure 9B illustrates the appoximation of the motion on the sphere S,
Figure 10 illustrates possible anchor points to be used in adapting a motion vector predictor according to the embodiment disclosed with figure 7,
Figure 11 illustrates a flow diagram for an exemplary method for adapting a motion vector predictor according to another embodiment of the present disclosure,
Figure 12A illustrates a current block BLK subdivided into subblocks for which an adapted motion vector predictor is derived according to an embodiment of the present disclosure,
Figure 12B illustrates a current block BLK subdivided into subblocks for which an adapted motion vector predictor is derived according to another embodiment of the present disclosure,
Figure 13A illustrates temporal rescaling for an adapted motion vector predictor of a current block BLK,
Figure 13B illustrates reference frame adaptation rescaling for an adapted motion vector predictor of a current block BLK,
Figure 14 illustrates a flow diagram for an exemplary method for adapting a motion vector predictor according to another embodiment of the present disclosure,
Figure 15 illustrates motion vector predictors in case of an affine motion vector tools,
Figure 16 illustrates a block diagrams for an exemplary encoder for coding an omnidirectional video into a bitstream according to an embodiment of the present disclosure,
Figure 17 illustrates block diagrams of an exemplary decoder for decoding a current block of a 2D picture representative of a picture of an omnidirectional video, from a bitstream according to an embodiment of the present disclosure,
Figure 18 illustrates an exemplary apparatus for encoding an omnidirectional video into a bistream according to one embodiment,
Figure 19 illustrates an exemplary apparatus for decoding a bistream representative of an omnidirectional video according to one embodiment,
Figure 20 illustrates a block diagram of an exemplary system in which various aspects of the exemplary embodiments of the present principles may be implemented,
Figure 21 represents a first embodiment of a system, according to a particular embodiment of the present principles,
Figure 22 represents a first embodiment of a system, according to a particular embodiment of the present principles,
Figure 23 represents a first embodiment of a system, according to a particular embodiment of the present principles,
Figure 24 represents a first embodiment of a system, according to a particular embodiment of the present principles,
Figure 25 represents a first embodiment of a system, according to a particular embodiment of the present principles,
Figure 26 represents a first embodiment of a system, according to a particular embodiment of the present principles,
Figure 27 represents a first embodiment of a system according to the present principles,
Figure 28 represents a first embodiment of a system according to the present principles,
Figure 29 represents a first embodiment of an immersive video rendering device according to the present principles,
Figure 30 represents a first embodiment of an immersive video rendering device according to the present principles, and
Figure 31 represents a first embodiment of an immersive video rendering device according to the present principles.

### 5. Detailed Description

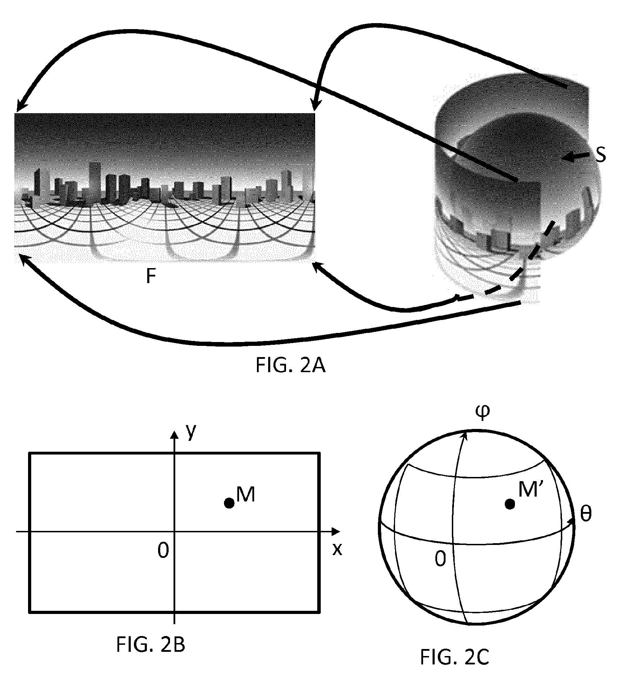

Figure 2A shows an example of projection from a surface S represented as a sphere onto one single rectangular picture F using an equi-rectangular projection.

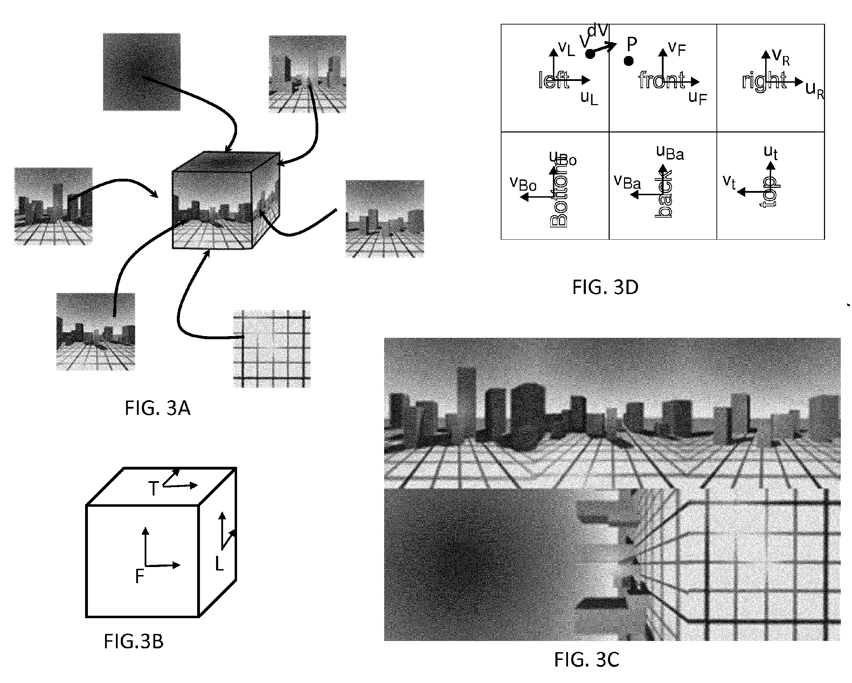

Figure 3A shows another example of projection from the surface S, here represented as a cube, onto six pictures or faces. The faces of the cube, with reference system illustrated on figure 3B, can possibly be re-arranged into one single picture as shown in figure 3C using a layout illustrated on figure 3D.

The projection of the 3D surface onto a 2D picture may introduce some distortions such as geometry distortions. For instance, straight lines are not straight anymore, orthonormal coordinate system are not orthonormal anymore. In case of motion representation between successive pictures of the omnidirectionnal video, the motion inside a block on the 3D surface can be considered homogenous. However, such assertion is no longer true when the block of the 3D surface is projected on a 2D picture.

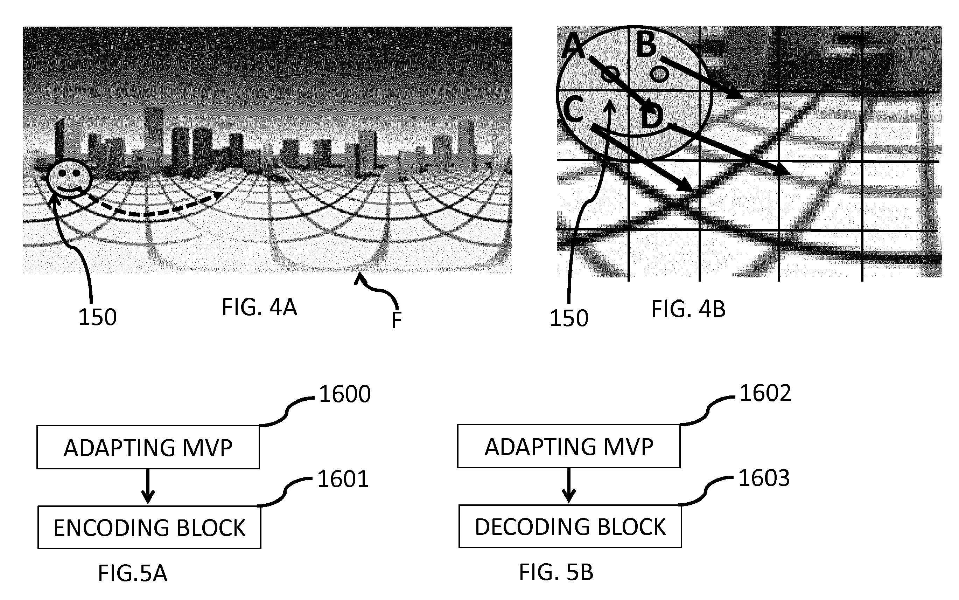

Figure 4A illustrates a projected picture F of a 3D surface representing an omnidirectionnal video in which an object 150 moves along a trajectory. In the scene represented by the omnidirectionnal video, the object 150 moves along a straight line. The resulting apparent motion in the projected picture F is represented as dotted line. The resulting motion vectors for an arbitrary block partitionning of the picture F is shown on figure 4B. As one can notice, even if the motion is perfectly straight in the rendered picture, the picture F to encode shows non uniform motion vectors. For blocks A, B, C and D carrying information of the moving object 150, the motion vectors are all different.

In classical video coding, block motion vector are predictively coded using motion vector predictors from neighboring blocks. For instance, motion vector of block D is predicted from motion vectors of blocks A, B and C.

It can be seen that after projection of the 3D surface on a 2D picture, the available motion vector predictors to predict the motion vector of the block D are not suitable as such prediction will lead to a large prediction residue to encode.

Therefore, there is a need for a new method and apparatus of encoding and decoding omnidirectional videos.

A large field-of-view content may be, among others, a three-dimension computer graphic imagery scene (3D CGI scene), a point cloud or an immersive video. Many terms might be used to design such immersive videos such as for example virtual Reality (VR), 360, panoramic, 4π, steradians, immersive, omnidirectional, large field of view.

An immersive video typically refers to a video encoded on a rectangular frame that is a two-dimension array of pixels (i.e., element of color information) like a "regular" video. In many implementations, the following processes may be performed. To be rendered, the frame is, first, mapped on the inner face of a convex volume, also called mapping surface (e.g., a sphere, a cube, a pyramid), and, second, a part of this volume is captured by a virtual camera. Images captured by the virtual camera are rendered on the screen of the immersive display device. A stereoscopic video is encoded on one or two rectangular frames, projected on two mapping surfaces which are combined to be captured by two virtual cameras according to the characteristics of the device.

Pixels may be encoded according to a mapping function in the frame. The mapping function may depend on the mapping surface. For a same mapping surface, several mapping functions are possible. For example, the faces of a cube may be structured according to different layouts within the frame surface. A sphere may be mapped according to an equirectangular projection or to a gnomonic projection for example. The organization of pixels resulting from the selected projection function modifies or breaks lines continuities, orthonormal local frame, pixel densities and introduces periodicity in time and space. These are typical features that are used to encode and decode videos. Existing encoding and decoding methods usually do not take specificities of immersive videos into account. Indeed, as immersive videos can be 360°videos, a panning, for example, introduces motion and discontinuities that require a large amount of data to be encoded while the content of the scene does not change. Taking immersive videos specificities into account while encoding and decoding video frames would bring valuable advantages to the encoding or decoding methods.

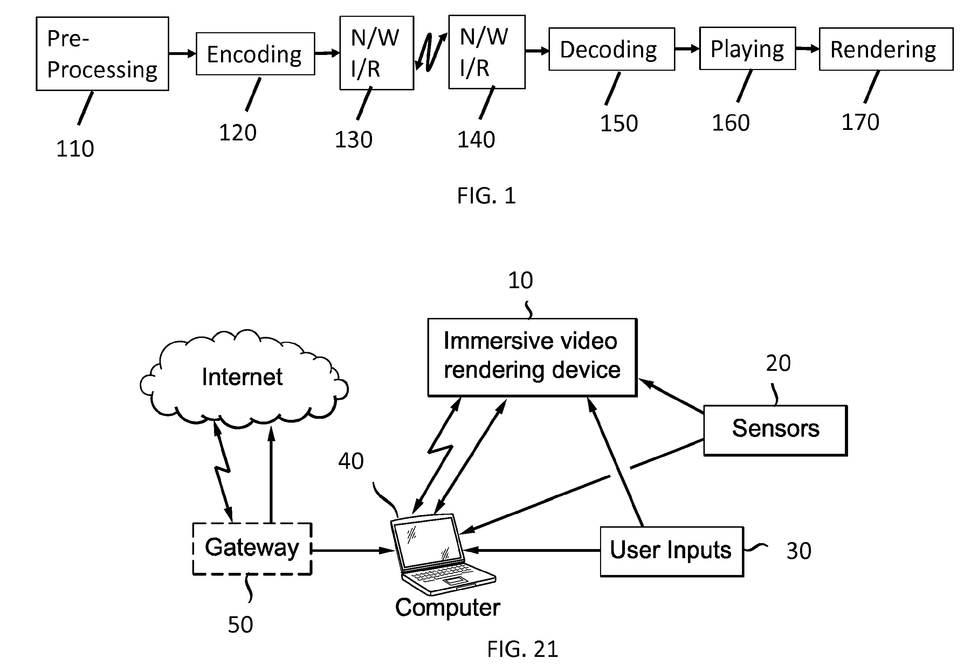

Figure 1 illustrates a general overview of an encoding and decoding system according to an example embodiment. The system of figure 1 is a functional system. A pre-processing module 110 may prepare the content for encoding by the encoding device 120. The pre-processing module 110 may perform multi-image acquisition, merging of the acquired multiple images in a common space (typically a 3D sphere if we encode the directions), and mapping of the 3D sphere into a 2D frame using, for example, but not limited to, an equirectangular mapping or a cube mapping. The pre-processing module 110 may also accept an omnidirectional video in a particular format (for example, equirectangular) as input, and pre-processes the video to change the mapping into a format more suitable for encoding. Depending on the acquired video data representation, the pre-processing module 110 may perform a mapping space change.

The encoding device 120 and the encoding method will be described with respect to other figures of the specification. After being encoded, the data, which may encode immersive video data or 3D CGI encoded data for instance, are sent to a network interface 130, which can be typically implemented in any network interface, for instance present in a gateway. The data are then transmitted through a communication network, such as internet but any other network can be foreseen. Then the data are received via network interface 140. Network interface 140 can be implemented in a gateway, in a television, in a set-top box, in a head mounted display device, in an immersive (projective) wall or in any immersive video rendering device.

After reception, the data are sent to a decoding device 150. Decoding function is one of the processing functions described in the following figures 21 to 31. Decoded data are then processed by a player 160. Player 160 prepares the data for the rendering device 170 and may receive external data from sensors or users input data. More precisely, the player 160 prepares the part of the video content that is going to be displayed by the rendering device 170. The decoding device 150 and the player 160 may be integrated in a single device (e.g., a smartphone, a game console, a STB, a tablet, a computer, etc.). In other embodiments, the player 160 may be integrated in the rendering device 170.

Several types of systems may be envisioned to perform the decoding, playing and rendering functions of an immersive display device, for example when rendering an immersive video.

A first system, for processing augmented reality, virtual reality, or augmented virtuality content is illustrated in figures 21 to 25. Such a system comprises processing functions, an immersive video rendering device which may be a head mounted display (HMD), a tablet or a smartphone for example and may comprise sensors. The immersive video rendering device may also comprise additional interface modules between the display device and the processing functions. The processing functions can be performed by one or several devices. They can be integrated into the immersive video rendering device or they can be integrated into one or several processing devices. The processing device comprises one or several processors and a communication interface with the immersive video rendering device, such as a wireless or wired communication interface.

The processing device can also comprise a second communication interface with a wide access network such as internet and access content located on a cloud, directly or through a network device such as a home or a local gateway. The processing device can also access a local storage through a third interface such as a local access network interface of Ethernet type. In an embodiment, the processing device may be a computer system having one or several processing units. In another embodiment, it may be a smartphone which can be connected through wired or wireless links to the immersive video rendering device or which can be inserted in a housing in the immersive video rendering device and communicating with it through a connector or wirelessly as well. Communication interfaces of the processing device are wireline interfaces (for example a bus interface, a wide area network interface, a local area network interface) or wireless interfaces (such as a IEEE 802.11 interface or a Bluetooth® interface).

When the processing functions are performed by the immersive video rendering device, the immersive video rendering device can be provided with an interface to a network directly or through a gateway to receive and/or transmit content.

In another embodiment, the system comprises an auxiliary device which communicates with the immersive video rendering device and with the processing device. In such an embodiment, this auxiliary device can contain at least one of the processing functions.

The immersive video rendering device may comprise one or several displays. The device may employ optics such as lenses in front of each of its display. The display can also be a part of the immersive display device like in the case of smartphones or tablets. In another embodiment, displays and optics may be embedded in a helmet, in glasses, or in a visor that a user can wear. The immersive video rendering device may also integrate several sensors, as described later on. The immersive video rendering device can also comprise several interfaces or connectors. It might comprise one or several wireless modules in order to communicate with sensors, processing functions, handheld or other body parts related devices or sensors.

The immersive video rendering device can also comprise processing functions executed by one or several processors and configured to decode content or to process content. By processing content here, it is understood all functions to prepare a content that can be displayed. This may comprise, for instance, decoding a content, merging content before displaying it and modifying the content to fit with the display device.

One function of an immersive content rendering device is to control a virtual camera which captures at least a part of the content structured as a virtual volume. The system may comprise pose tracking sensors which totally or partially track the user's pose, for example, the pose of the user's head, in order to process the pose of the virtual camera. Some positioning sensors may track the displacement of the user. The system may also comprise other sensors related to environment for example to measure lighting, temperature or sound conditions. Such sensors may also be related to the users' bodies, for instance, to measure sweating or heart rate. Information acquired through these sensors may be used to process the content. The system may also comprise user input devices (e.g., a mouse, a keyboard, a remote control, a joystick). Information from user input devices may be used to process the content, manage user interfaces or to control the pose of the virtual camera. Sensors and user input devices communicate with the processing device and/or with the immersive rendering device through wired or wireless communication interfaces.

Using figures 21 to 25, several embodiments are described of this first type of system for displaying augmented reality, virtual reality, augmented virtuality or any content from augmented reality to virtual reality.

Figure 21 illustrates a particular embodiment of a system configured to decode, process and render immersive videos. The system comprises an immersive video rendering device 10, sensors 20, user inputs devices 30, a computer 40 and a gateway 50 (optional).

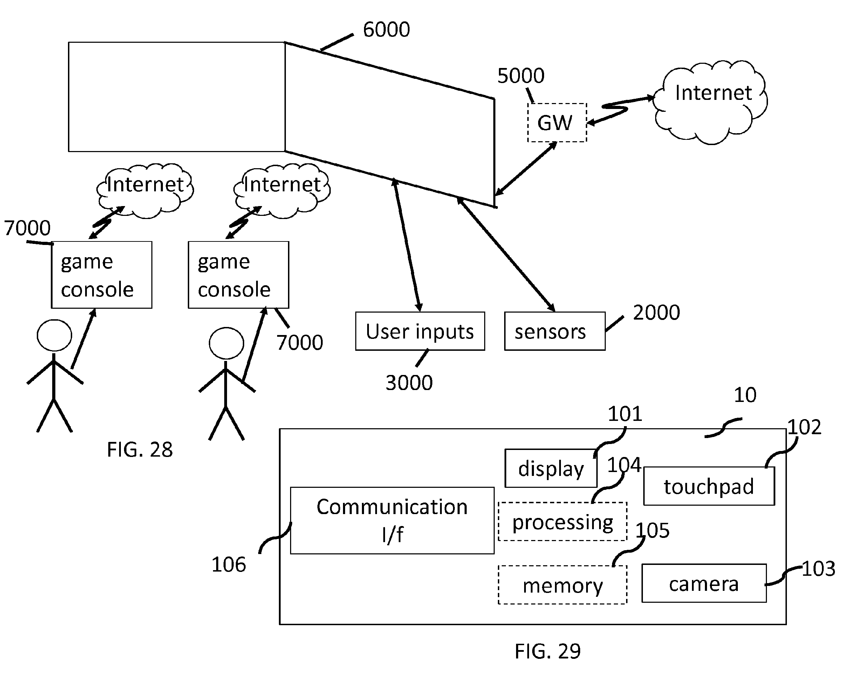

The immersive video rendering device 10, illustrated in figure 29, comprises a display 101. The display is, for example of OLED or LCD type. The immersive video rendering device 10 is, for instance a HMD, a tablet or a smartphone. The device 10 may comprise a touch surface 102 (e.g., a touchpad or a tactile screen), a camera 103, a memory 105 in connection with at least one processor 104 and at least one communication interface 106. The at least one processor 104 processes the signals received from the sensors 20.

Some of the measurements from sensors are used to compute the pose of the device and to control the virtual camera. Sensors used for pose estimation are, for instance, gyroscopes, accelerometers or compasses. More complex systems, for example using a rig of cameras may also be used. In this case, the at least one processor performs image processing to estimate the pose of the device 10. Some other measurements are used to process the content according to environment conditions or user's reactions. Sensors used for observing environment and users are, for instance, microphones, light sensor or contact sensors. More complex systems may also be used like, for example, a video camera tracking user's eyes. In this case the at least one processor performs image processing to operate the expected measurement. Data from sensors 20 and user input devices 30 can also be transmitted to the computer 40 which will process the data according to the input of these sensors.

Memory 105 includes parameters and code program instructions for the processor 104. Memory 105 can also comprise parameters received from the sensors 20 and user input devices 30. Communication interface 106 enables the immersive video rendering device to communicate with the computer 40. The communication interface 106 of the processing device may be wireline interfaces (for example a bus interface, a wide area network interface, a local area network interface) or wireless interfaces (such as a IEEE 802.11 interface or a Bluetooth® interface).

Computer 40 sends data and optionally control commands to the immersive video rendering device 10. The computer 40 is in charge of processing the data, i.e., prepare them for display by the immersive video rendering device 10. Processing can be done exclusively by the computer 40 or part of the processing can be done by the computer and part by the immersive video rendering device 10. The computer 40 is connected to internet, either directly or through a gateway or network interface 50. The computer 40 receives data representative of an immersive video from the internet, processes these data (e.g., decodes them and possibly prepares the part of the video content that is going to be displayed by the immersive video rendering device 10) and sends the processed data to the immersive video rendering device 10 for display. In another embodiment, the system may also comprise local storage (not represented) where the data representative of an immersive video are stored, said local storage can be on the computer 40 or on a local server accessible through a local area network for instance (not represented).

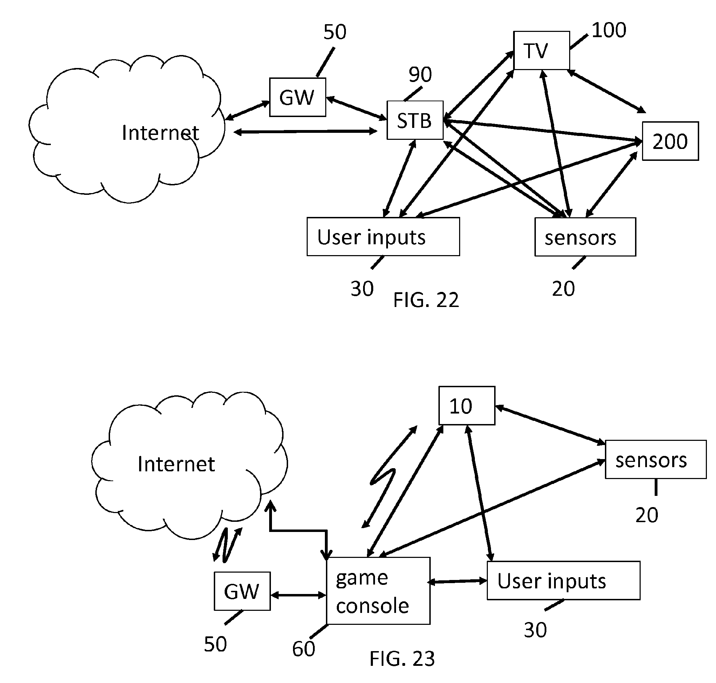

Figure 22 represents a second embodiment. In this embodiment, a STB 90 is connected to a network such as internet directly (i.e., the STB 90 comprises a network interface) or via a gateway 50. The STB 90 is connected through a wireless interface or through a wired interface to rendering devices such as a television set 100 or an immersive video rendering device 200. In addition to classic functions of a STB, STB 90 comprises processing functions to process video content for rendering on the television 100 or on any immersive video rendering device 200. These processing functions are the same as the ones that are described for computer 40 and are not described again here. Sensors 20 and user input devices 30 are also of the same type as the ones described earlier with regards to figure 21. The STB 90 obtains the data representative of the immersive video from the internet. In another embodiment, the STB 90 obtains the data representative of the immersive video from a local storage (not represented) where the data representative of the immersive video are stored.

Figure 23 represents a third embodiment related to the one represented in figure 21. The game console 60 processes the content data. Game console 60 sends data and optionally control commands to the immersive video rendering device 10. The game console 60 is configured to process data representative of an immersive video and to send the processed data to the immersive video rendering device 10 for display. Processing can be done exclusively by the game console 60 or part of the processing can be done by the immersive video rendering device 10.

The game console 60 is connected to internet, either directly or through a gateway or network interface 50. The game console 60 obtains the data representative of the immersive video from the internet. In another embodiment, the game console 60 obtains the data representative of the immersive video from a local storage (not represented) where the data representative of the immersive video are stored, said local storage can be on the game console 60 or on a local server accessible through a local area network for instance (not represented).

The game console 60 receives data representative of an immersive video from the internet, processes these data (e.g., decodes them and possibly prepares the part of the video that is going to be displayed) and sends the processed data to the immersive video rendering device 10 for display. The game console 60 may receive data from sensors 20 and user input devices 30 and may use them to process the data representative of an immersive video obtained from the internet or from the from the local storage.

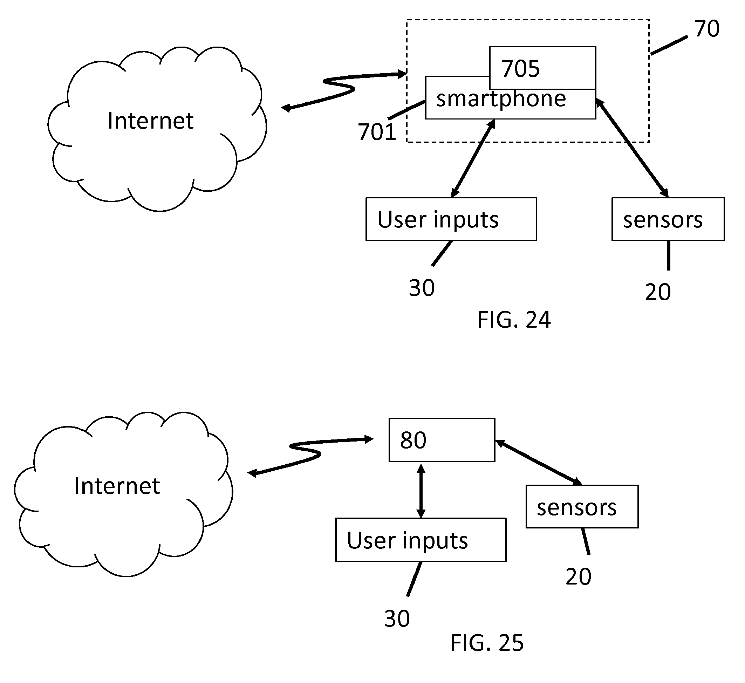

Figure 24 represents a fourth embodiment of said first type of system where the immersive video rendering device 70 is formed by a smartphone 701 inserted in a housing 705. The smartphone 701 may be connected to internet and thus may obtain data representative of an immersive video from the internet. In another embodiment, the smartphone 701 obtains data representative of an immersive video from a local storage (not represented) where the data representative of an immersive video are stored, said local storage can be on the smartphone 701 or on a local server accessible through a local area network for instance (not represented).

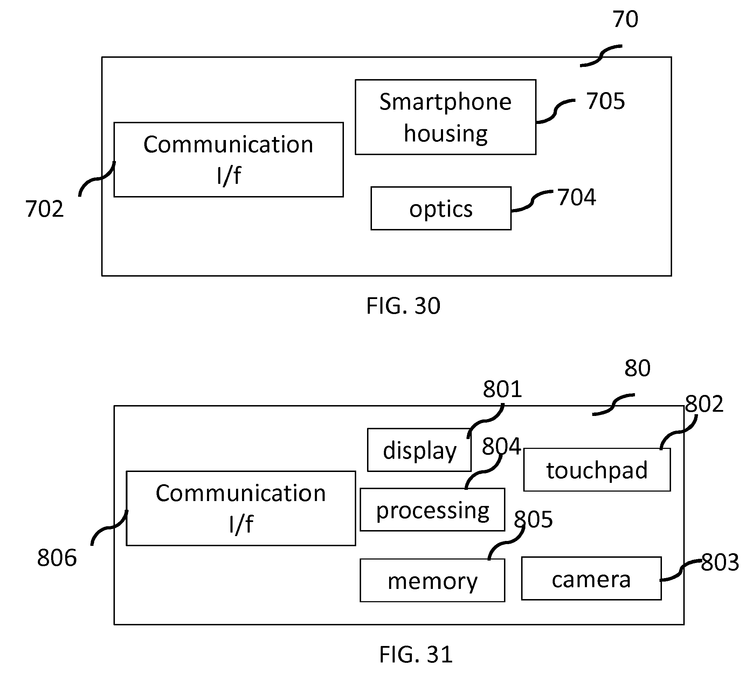

Immersive video rendering device 70 is described with reference to figure 30 which gives a preferred embodiment of immersive video rendering device 70. It optionally comprises at least one network interface 702 and the housing 705 for the smartphone 701. The smartphone 701 comprises all functions of a smartphone and a display. The display of the smartphone is used as the immersive video rendering device 70 display. Therefore no display other than the one of the smartphone 701 is included. However, optics 704, such as lenses, are included for seeing the data on the smartphone display. The smartphone 701 is configured to process (e.g., decode and prepare for display) data representative of an immersive video possibly according to data received from the sensors 20 and from user input devices 30. Some of the measurements from sensors are used to compute the pose of the device and to control the virtual camera. Sensors used for pose estimation are, for instance, gyroscopes, accelerometers or compasses. More complex systems, for example using a rig of cameras may also be used. In this case, the at least one processor performs image processing to estimate the pose of the device 10. Some other measurements are used to process the content according to environment conditions or user's reactions. Sensors used for observing environment and users are, for instance, microphones, light sensor or contact sensors. More complex systems may also be used like, for example, a video camera tracking user's eyes. In this case the at least one processor performs image processing to operate the expected measurement.

Figure 25 represents a fifth embodiment of said first type of system in which the immersive video rendering device 80 comprises all functionalities for processing and displaying the data content. The system comprises an immersive video rendering device 80, sensors 20 and user input devices 30. The immersive video rendering device 80 is configured to process (e.g., decode and prepare for display) data representative of an immersive video possibly according to data received from the sensors 20 and from the user input devices 30. The immersive video rendering device 80 may be connected to internet and thus may obtain data representative of an immersive video from the internet. In another embodiment, the immersive video rendering device 80 obtains data representative of an immersive video from a local storage (not represented) where the data representative of an immersive video are stored, said local storage can be on the rendering device 80 or on a local server accessible through a local area network for instance (not represented).

The immersive video rendering device 80 is illustrated in figure 31. The immersive video rendering device comprises a display 801. The display can be for example of OLED or LCD type, a touchpad (optional) 802, a camera (optional) 803, a memory 805 in connection with at least one processor 804 and at least one communication interface 806. Memory 805 comprises parameters and code program instructions for the processor 804. Memory 805 can also comprise parameters received from the sensors 20 and user input devices 30. Memory can also be large enough to store the data representative of the immersive video content. For this several types of memories can exist and memory 805 can be a single memory or can be several types of storage (SD card, hard disk, volatile or non-volatile memory...) Communication interface 806 enables the immersive video rendering device to communicate with internet network. The processor 804 processes data representative of the video in order to display them of display 801. The camera 803 captures images of the environment for an image processing step. Data are extracted from this step in order to control the immersive video rendering device.

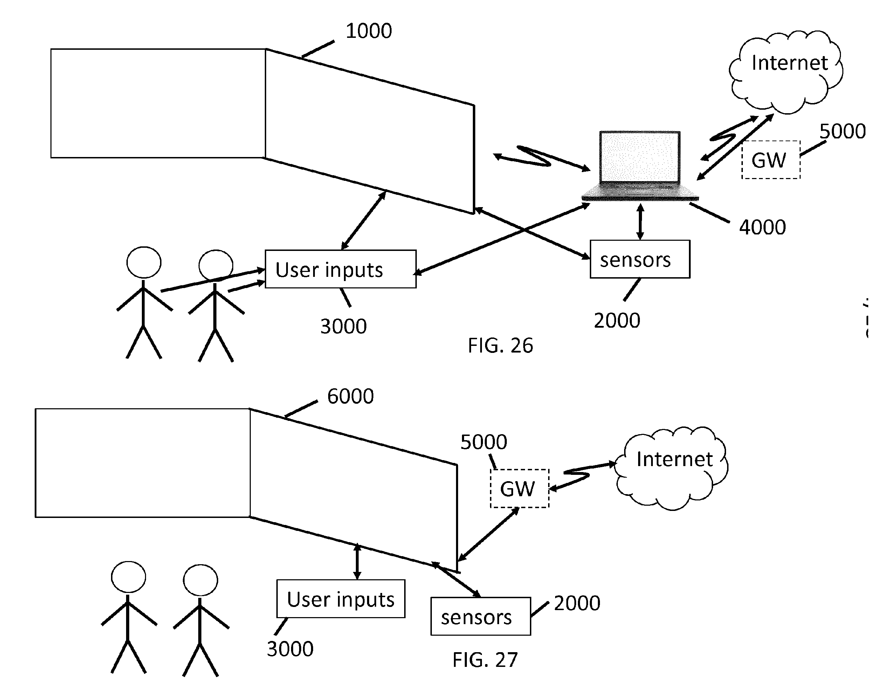

A second system, for processing augmented reality, virtual reality, or augmented virtuality content is illustrated in figures 26 to 28. Such a system comprises an immersive wall.

Figure 26 represents a system of the second type. It comprises a display 1000 which is an immersive (projective) wall which receives data from a computer 4000. The computer 4000 may receive immersive video data from the internet. The computer 4000 is usually connected to internet, either directly or through a gateway 5000 or network interface. In another embodiment, the immersive video data are obtained by the computer 4000 from a local storage (not represented) where the data representative of an immersive video are stored, said local storage can be in the computer 4000 or in a local server accessible through a local area network for instance (not represented).

This system may also comprise sensors 2000 and user input devices 3000.The immersive wall 1000 can be of OLED or LCD type. It can be equipped with one or several cameras. The immersive wall 1000 may process data received from the sensor 2000 (or the plurality of sensors 2000). The data received from the sensors 2000 may be related to lighting conditions, temperature, environment of the user, e.g., position of objects.

The immersive wall 1000 may also process data received from the user inputs devices 3000. The user input devices 3000 send data such as haptic signals in order to give feedback on the user emotions. Examples of user input devices 3000 are handheld devices such as smartphones, remote controls, and devices with gyroscope functions.

Sensors 2000 and user input devices 3000 data may also be transmitted to the computer 4000. The computer 4000 may process the video data (e.g., decoding them and preparing them for display) according to the data received from these sensors/user input devices. The sensors signals can be received through a communication interface of the immersive wall. This communication interface can be of Bluetooth type, of WIFI type or any other type of connection, preferentially wireless but can also be a wired connection.

Computer 4000 sends the processed data and optionally control commands to the immersive wall 1000. The computer 4000 is configured to process the data, i.e., preparing them for display, to be displayed by the immersive wall 1000. Processing can be done exclusively by the computer 4000 or part of the processing can be done by the computer 4000 and part by the immersive wall 1000.

Figure 27 represents another system of the second type. It comprises an immersive (projective) wall 6000 which is configured to process (e.g., decode and prepare data for display) and display the video content. It further comprises sensors 2000, user input devices 3000.

The immersive wall 6000 receives immersive video data from the internet through a gateway 5000 or directly from internet. In another embodiment, the immersive video data are obtained by the immersive wall 6000 from a local storage (not represented) where the data representative of an immersive video are stored, said local storage can be in the immersive wall 6000 or in a local server accessible through a local area network for instance (not represented).

This system may also comprise sensors 2000 and user input devices 3000.The immersive wall 6000 can be of OLED or LCD type. It can be equipped with one or several cameras. The immersive wall 6000 may process data received from the sensor 2000 (or the plurality of sensors 2000). The data received from the sensors 2000 may be related to lighting conditions, temperature, environment of the user, e.g., position of objects.

The immersive wall 6000 may also process data received from the user inputs devices 3000. The user input devices 3000 send data such as haptic signals in order to give feedback on the user emotions. Examples of user input devices 3000 are handheld devices such as smartphones, remote controls, and devices with gyroscope functions.

The immersive wall 6000 may process the video data (e.g., decoding them and preparing them for display) according to the data received from these sensors/user input devices. The sensors signals can be received through a communication interface of the immersive wall. This communication interface can be of Bluetooth type, of WIFI type or any other type of connection, preferentially wireless but can also be a wired connection. The immersive wall 6000 may comprise at least one communication interface to communicate with the sensors and with internet.

Figure 28 illustrates a third embodiment where the immersive wall is used for gaming. One or several gaming consoles 7000 are connected, preferably through a wireless interface to the immersive wall 6000. The immersive wall 6000 receives immersive video data from the internet through a gateway 5000 or directly from internet. In another embodiment, the immersive video data are obtained by the immersive wall 6000 from a local storage (not represented) where the data representative of an immersive video are stored, said local storage can be in the immersive wall 6000 or in a local server accessible through a local area network for instance (not represented).

Gaming console 7000 sends instructions and user input parameters to the immersive wall 6000. Immersive wall 6000 processes the immersive video content possibly according to input data received from sensors 2000 and user input devices 3000 and gaming consoles 7000 in order to prepare the content for display. The immersive wall 6000 may also comprise internal memory to store the content to be displayed.

In one embodiment, we consider that the omnidirectional video is represented in a format that enables the projection of the surrounding 3D surface S onto a standard rectangular frame F that is represented in a format suitable for a video codec. Various projections can be used to project 3D surfaces to 2D surfaces. For example, figure 2A shows that an exemplary sphere surface S is mapped to a 2D frame F using an equi-rectangular projection, and figure 3A shows that an exemplary cube surface is mapped to a 2D frame as shown in figure 3C using a cube mapping as discussed above. Other mappings, such as pyramidal, icosahedral or octahedral mapping, can map a 3D surface into a 2D frame.

The 2D frame F can then be encoded using existing video encoders, for example, encoders compliant with VP9, VP10, MPEG-2, H.264/AVC, or H.265/HEVC. The 2D frame F can also be encoded with an encoder adaptive to the properties of omnidirectional videos, for example, using an adjusted VP9, VP10, MPEG-2, H.264/AVC, or H.265/HEVC encoder. After encoding and decoding, the decoded 2D frame can be mapped back to the corresponding 3D surface, for example, a sphere for an equi-rectangular mapping or a cube for cube mapping. The 3D surface can then be projected onto a "virtual screen" corresponding to a user's viewpoint in order to obtain the final rendered frame. The steps of decoding the 2D frame and projecting from the 3D surface to a rendered frame can be merged into a single step, where a part of the decoded frame is mapped onto the rendered frame. In the present application, we may use a projection space to refer to the rendered frame or the 3D surface to which the projection is performed onto.

For simplicity of notation, we may refer to the decoded 2D frame also as "F," and the 3D surface used in rendering also as S. It should be understood that the 2D frame to be encoded and the 2D frame to be decoded may be different due to video compression, and the 3D surface in pre-processing and the 3D surface in rendering may also be different. In the present application, we use the terms "mapping" and "projection" interchangeably, use the terms "pixel" and "sample" interchangeably, and use the terms "frame" and "picture" interchangeably.

Figure 5A illustrates a flow diagram for an exemplary method for encoding an omnidirectional video into a bitstream according to an embodiment of the present disclosure. Here, it is assumed that the pictures of an omnidirectional video are represented as 3D surfaces, such as but not limited to a sphere or a cube, such as disclosed above. The 3D surface is then projected onto at least one 2D picture using a projection function for encoding. For instance, such a projection function could be an equi-rectangular projection or other type of projection function.

The 2D picture is then divided into blocks and each block is encoded using proposed video compression techniques for instance.

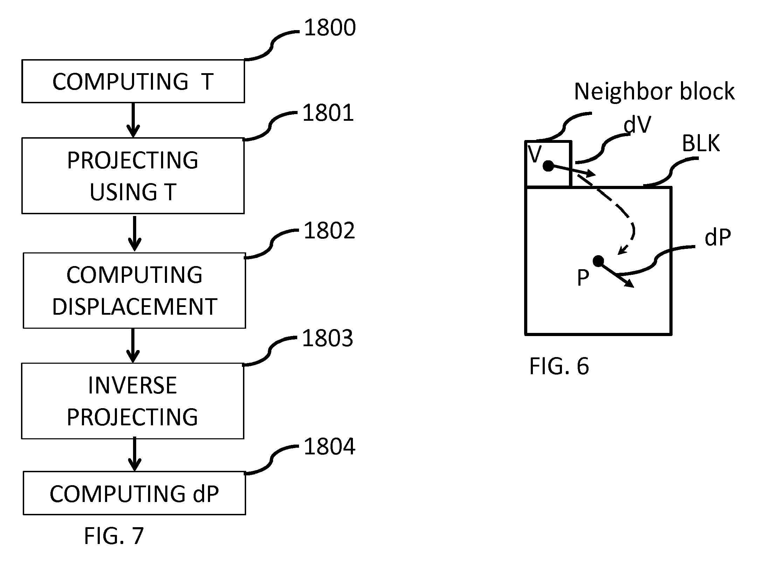

Figure 6 illustrates a block BLK of the 2D picture to encode and a motion vector predictor dV available for encoding the block BLK. Such motion vector predictor may be derived as a coded motion vector for a neighboring block of the current block BLK. In the example shown on figure 6, the motion vector predictor dV is the motion vector coded for the top neighbor block of block BLK.

Such motion vector predictor dV may be used for predicting a motion vector assigned to the current block BLK or may be used directly for motion-compensating the current block BLK in a reference frame of the projected omnidirectional video for computing a prediction block residue for the block BLK.

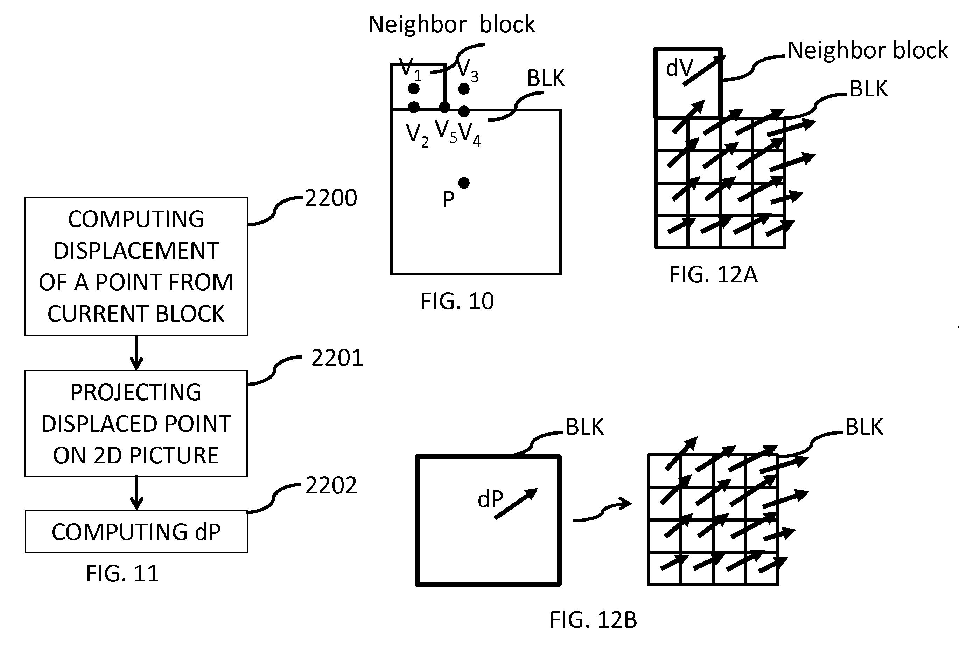

Back to figure 5A, in step 1600, the motion vector predictor dV is adapted for the current block BLK using a least the projection function used to project the 3D surface representing the omnidirectional video onto the 2D picture. An adapted motion vector predictor dP is thus obtained. This process may be iterated for all the motion vector predictors available for coding the current block BLK. An adapted motion vector predictor is then obtained for each available motion vector predictor. Further details for adapting the motion vector predictor dV are given below in relation with figures 7 and 11.

In step 1601, the current block BLK is encoded using the adapted motion vector predictor dP using conventional video compression techniques for instance, instead of using direclty the motion vector predictor dV. The adapted motion vector predictor dP may be used for predicting the motion vector assigned to the current block BLK or may be used directly for motion-compensating the current block BLK in a reference frame of the projected omnidirectional video for computing a prediction block residue for the block BLK.

Figure 5B illustrates a flow diagram for an exemplary method for decoding a bitstream representative of a coded omnidirectional video, according to an embodiment of the present disclosure.

In step 1602, the motion vector predictor dV used to encode the current block BLK is adapted using a least the projection function used to project the 3D surface representing the omnidirectional video onto the 2D picture, as it is done on the encoder side. If the current block BLK is coded using more than one motion vector predictors dV, each motion vector predictor used to code the current block BLK is adapted according to the present principle.

In step 1603, the current block BLK is decoded using the adapted motion vector predictor dP or the adapted motion vector predictors. Depending on the coding mode used to code the current block BLK, the adapted motion vector predictor(s) dP may be used for reconstructing a motion vector of the current block BLK from a motion vector residue decoded from the bitstream or it may be used directly for motion-compensating the current block BLK in a reference frame of the projected omnidirectional video for reconstructing the current block BLK from a prediction block residue decoded from the bitstream.

Figure 7 illustrates a flow diagram for an exemplary method for adapting a motion vector predictor dV of a neighbor block for a point P of a current block BLK to encode, according to an embodiment of the present disclosure. According to this embodiment, the coordinates of the motion vector predictor dV are expressed in the coordinate reference system of the 2D picture F.

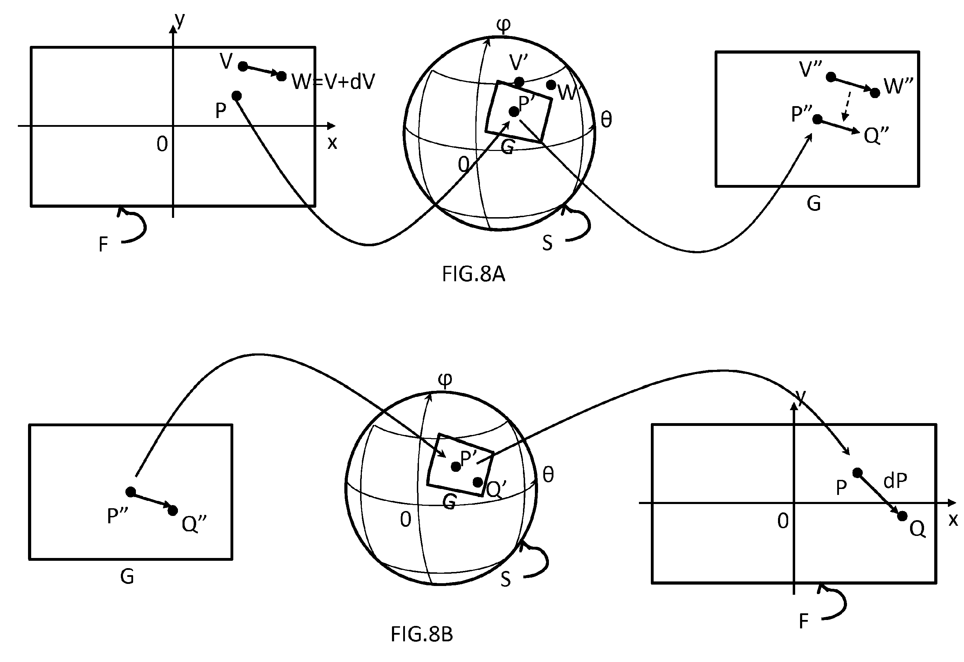

In step 1800, a transformation T is computed to project a point from the 2D picture to encode (F on figure 8A) to a rendered frame G on figure 8A. As illustrated on figure 8A, to project a point P from the picture F to a point P" in the rendered frame G, the intermediate 3D space is used. Note that the rendered frame G reprensents the scene viewed by a "classical" camera centered at the point of interest P, i.e., T tranforms the frame F to "look like" a "classical" frame.

The computation of the transformation T is disclosed below in the case of an equi-rectangular projection. Such a projection function defined the function f as follows, we denote P(x,y) a point from the picture F and P'(θ,ϕ) a point from the surface of the sphere S, assuming normalized coordinates: $f : P \left(x, y\right) \to P ′ \left(θ, φ\right)$ $θ = 2 πx$ $φ = πy$

With non-normalized coordinates, the coordinates of point P' are as follows: $θ = \frac{2 π \left(x-\frac{w}{2}\right)}{w}$ $φ = \frac{π \left(\frac{h}{2}-y\right)}{h}$

A given point P' of the sphere thus corresponds to a point P^{3d} from the 3D space. The coordinates of P^{3d} are given by: $3 d : P ′ \to {P}^{3 d}$ ${P}^{3 d} = \left[\begin{matrix}sin \left(φ-\frac{π}{2}\right) cos \left(θ\right) \\ sin \left(φ-\frac{π}{2}\right) sin \left(θ\right) \\ cos \left(φ-\frac{π}{2}\right)\end{matrix}\right]$

Then, the 3D space is mapped to a rendered frame G. The frame G is chosen such that the projection P" of P in G is at the center of the frame. The frame G corresponds to the local projection of the surface S to a plane tangent in P' to the surface S.

In order to fix the frame G tangent to the sphere S, a rotation matrix R is defined such that the point P^{3d} is projected in P"=(0,0). In order to fix the matrix R, an arbitrary unit vector U=(ux,uy,uz) is used and the matrix R is then deduced: $R = \left[\begin{matrix}{r}_{11} & {r}_{12} & {r}_{13} \\ {r}_{21} & {r}_{22} & {r}_{23} \\ {r}_{31} & {r}_{32} & {r}_{33}\end{matrix}\right] = \left[\begin{matrix}{r}_{1} \\ {r}_{2} \\ {r}_{3}\end{matrix}\right]$ ${H}_{1} = U \times {P}^{3 d} , {r}_{1} = \frac{{H}_{1}}{‖ {H}_{1} ‖}$ $\begin{matrix}{H}_{2} = {r}_{1} \times {P}^{3 d} , {r}_{2} = \frac{{H}_{2}}{‖ {H}_{2} ‖} \\ {r}_{3} = {r}_{1} \times {r}_{2}\end{matrix}$ One can see that there exists an ambiguity on the frame orientation around the point P' (which is given by the choice of the vector U). A reasonable choice for U can be U=(1,0,0). The choice for U depends on the choice of the coordinate frame system in F and S.

Another equivalent way to find the frame G which allows to fix the orientation is to derive the plane from the 3D axis around the point P: ${dX}_{P}^{3 d} = 3 d \left(f\left(P+dX\right)\right) - 3 d \left(f\left(P-dX\right)\right)$ ${dX}_{PN}^{3 d} = \frac{{dX}_{P}^{3 d}}{‖ {dX}_{P}^{3 d} ‖}$ $\begin{matrix}d {Y}_{P}^{3 d} = 3 d \left(f\left(P+dY\right)\right) - 3 d \left(f\left(p-dY\right)\right) \\ {dY}_{PN}^{3 d} = \frac{{dY}_{P}^{3 d}}{‖ {dY}_{P}^{3 d} ‖}\end{matrix}$ where $dX = {\left[\frac{1}{2} 0\right]}^{t}$ and $dY = {\left[0 \frac{1}{2}\right]}^{t} .$

The projection is then done on the local plane defined by the origin P^{3d} and the local frame dX^{3d}_{PN} and dY^{3d}_{PN}.

Once the rotation R has been fixed, the point P^{3d} is rotated and then projected on G: $P " = Proj \left(R {P}^{3 d}\right) ,$ with $Proj : {P}^{3 d} \to P "$ $Proj \left(\left[\begin{matrix}X \\ Y \\ Z\end{matrix}\right]\right) = \left[\begin{matrix}X \\ \overline{Z} \\ Y \\ \overline{Z}\end{matrix}\right]$

The transformation T can finally be expressed as: $T : P \to P "$ $P ′ = f \left(P\right)$ $P " = Proj \left(R 3d\left(P′\right)\right)$ $P " = T \left(P\right) = Proj ( R 3 d \left(f\left(P\right)\right)$

The computation of the inverse transformation T⁻¹ is disclosed below. In order to go back to the frame F from a point P" in G, the inverse transform T⁻¹ is computed: ${T}^{- 1} : P " \to P$ $\begin{matrix}{P}^{3 d} = {R}^{t} {Proj}^{- 1} \left(P"\right) \\ P = {f}^{- 1} \left(3{d}^{- 1}\left({R}^{t}{Proj}^{- 1}\left(P"\right)\right)\right)\end{matrix}$

The back projection from the rendered frame G to the 3D space is given by: ${Proj}^{- 1} : P " \to {P}^{3 d}$ ${Proj}^{- 1} \left(\left[\begin{matrix}x \\ y\end{matrix}\right]\right) = \left[\begin{matrix}\frac{- x}{\sqrt{1 + {x}^{2} + {y}^{2}}} \\ \frac{- y}{\sqrt{1 + {x}^{2} + {y}^{2}}} \\ \frac{- 1}{\sqrt{1 + {x}^{2} + {y}^{2}}}\end{matrix}\right]$

From a point P^{3d}(X,Y,Z), we can go back to the sphere parametrization using the standard Cartesian to polar transformation: $3 d : {P}^{3 d} \to P ′$ $θ = atan \left(\frac{Y}{X}\right) + π$ $φ = - atan \left(\frac{\sqrt{{X}^{2} + {Y}^{2}}}{Z}\right) + \frac{π}{2}$

For singular points (typically, at the poles), when X and Y are close to 0, the polar coordinates are directly set as *θ* = 0 and $φ = sign \left(Z\right) \frac{π}{2} .$

The inverse projection function is then given by: ${f}^{- 1} : P ′ \left(θ, φ\right) \to P \left(x, y\right)$ $x = θ / 2 π$ $y = φ / π$

On figures 8A and 8B, the point on the surface of the sphere (P') and the corresponding point in the 3D space (P^{3d}) are shown together.

The computation of the transformation T can be performed once for the whole video since the projection function is fixed for the video and encoded at a sequence level. The result of this computation can be stored in a LUT (Look-Up Table) in order to reduce computational complexity. Such a LUT will allow to derive for each point of the 2D picture a corresponding point in the rendered frame G and inversely.

In step 1801, the point P of the current block BLK is projected using the tranformation T on the rendered frame G: P"=T(P). An anchor point V is projected using the tranformation T on the rendered frame G: V"=T(V). The anchor point V is displaced in the 2D picture F by the motion vector predictor dV with W=V+dV. The displaced anchor point W is projected using the tranformation T on the rendered frame G: W"=T(W). By construction, as discussed above, P" is at the center of the rendered frame G: P"=[0,0]^{t}.

In step 1802, the projected motion vector predictor dV" is computed as dV"=(W"-V"). the point P" is then displaced using dV" with: Q"=P"+dV".

In step 1803, the point Q" is then backwardly projected onto the 2D picture F using the inverse transformation T⁻¹, giving Q= T⁻¹(Q").

In step 1804, the adapted motion vector predictor dP is then computed as the difference between the location of the point Q and the point P: dP=Q-P.

The adapted motion vector predictor dP for any given point P of the 2D picture may thus be obtained using the following equation Eq. (1): dP = Q - P $dP = {f}^{- 1} \left({R}^{t}{Proj}^{- 1}\left(P"+dP"\right)\right) - P$ $dP = {f}^{- 1} - \left({R}^{t}{Proj}^{- 1}\left(Proj\left(R f\left(P\right)\right)+Proj\left(R f\left(V+dV\right)\right)-Proj\left(R f\left(V\right)\right)\right)\right) - P$

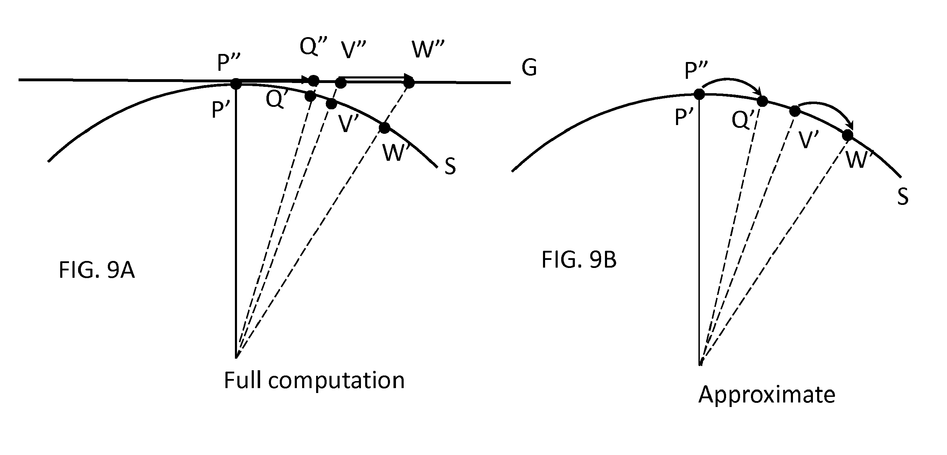

In the above computation, the motion vector dV at point V has been projected in the rendered frame G in order to deduce the motion vector dP at P. As illustrated on figure 9A, the points {P',V',W'} on the sphere S are projected on the rendered frame G at {P",V",W"}. The resulting point Q" is then projected back on the sphere S at point Q', and then projected back in the frame F at point Q.

For the points V and W close to the point P, which is often the case, the projection on the rendered frame G can be omitted, as illustrated on figure 9B. In this case, the point Q' can be directly deduced as: *Q'* = *P'* + (*W' - V'*), where the points {P',Q',V',W'} are all in polar coordinates, because the distance d(V",W") is almost equal to the arc length d(V',W'). According to this embodiment, the equation Eq. (1), can then be simplified to Eq. (1 b): $dP = {f}^{- 1} \left(P′+dP′\right) - P$ $dP = {f}^{- 1} \left(f\left(P\right)+f\left(V+dV\right)-f\left(V\right)\right) - P$

In the embodiment disclosed with figure 7, the motion vector predictor dV has been applied to an anchor point V of the 2D picture. Such an anchor point is illustrated in figure 6 as the center of the neighbor block from which the motion vector predictor dV is used. However, the motion is non-uniform inside the block and the choice of the anchor point may have an impact on the resulting adapted motion vector predictor used for the current block BLK.

Assuming each block has one motion vector, as shown in figure 10, for a given top block, according to different embodiments, the anchor point V used to compute the adapted motion vector predictor dP can be chosen among the following points:
- the center of the neighbor block V₁,
- the projection V₂ of the center V₁ on the edge of the current block BLK,
- the point V₃ resulting from the translation of the block center V₁ to aligned V₁ with the center P of the current block BLK,
- the point V₄ resulting from the projection of V₃ on the edge of the current block BLK,
- the closest point V₅ from the neighbor block to the center of the current block.

A similar reasoning can be deduced for other neighbor blocks, for example, a left neighbor block, a top-left neighbor block.

Figure 11 is a flow diagram for an exemplary method for adapting a motion vector predictor according to another embodiment of the present disclosure. Using the approximation shown on figure 9B, another way to rectify the prediction of the motion vectors is to directly express the motion vector using the sphere S coordinate system. Such an embodiment allows a more straightforward adaptation of the motion vector predictor for some projection function, especially for continuous parametrization of the 3D surface. According to this embodiment, a point M(x,y) in the frame F is associated with a motion vector dM=(dθ,dϕ), expressed as an angle differential on the sphere at point M'(θ,ϕ) shown on figure 2B and 2C.

The motion vector predictor dV' at a point P' on the sphere from a neighbor block is directly dV'=(dθ,dϕ). However, the motion compensation to predict the current block BLK in the 2D picture using the motion vector dV'=(dθ,dϕ) at the point P requires to project the motion vector dV' in the frame F coordinate system for obtaining the adapted motion vector predictor dP in the frame F.

In step 2200, a point P'(θ,ϕ) of the current block on the sphere is displaced by the motion vector predictor dV with P'_{d}=P'+dV.

In step 2201, the displaced point P'_{d} is projected using the inverse transform T⁻¹ disclosed above in relation with figure 7: P_{d}=T⁻¹(P'_{d}).

In step 2202, the adapted motion vector predictor dP for point P is computed as: dP=P_{d}-P.

Using the computation of the transformation T disclosed above, dP can be derived as follows: $dP = {f}^{- 1} - \left({R}^{t}{Proj}^{- 1}\left(P′+dV′\right)\right) - P$ $dP = {f}^{- 1} \left({R}^{t}{Proj}^{- 1}\left(f\left(P\right)+dV′\right)\right) - P$

As the motion vector is now expressed in polar coordinates, the unit is changed, depending on the projection function. The unit is found using the projection function f. For equirectangular projection, a unit of one pixel in the picture F correspond to an angle of 2π/width, where width is the picture width.

Following, the embodiment disclosed with figure 7 for adaptating the motion vector predictor is disclosed in the case of a cube mapping using a layout of the faces of the cube as illustrated with figure 3D.

Assuming a point P(x,y) of a current block in the front face, we want to predict the motion vector for the current block at point P, from a point V(x,y) located in the left face.

Following the steps explained in figure 7, the projections of V and W=V+dV in the left face are computed: $V \left(x, y\right) \to {V}_{L}^{′} \left({u}_{L}, {v}_{L}\right)$ $W \left(x, y\right) = V \left(x, y\right) + dV \left(dx, dy\right) \to {W}_{L}^{′} \left({u}_{L}^{′}, {v}_{L}^{′}\right) = {W}_{L}^{′} \left({u}_{L}+{du}_{L},{v}_{L}+{dv}_{L}\right) ,$ where (*du_{L}, dv_{L}*) stands for the coordinates of the motion vector predictor dV in the left face. The points are then projected from the surface to the 3D space: ${V}_{L}^{′} \left({u}_{L}, {v}_{L}\right) \to V ′ \left(X, Y, Z\right) = \left[\begin{matrix}- 1 \\ {u}_{L} \\ {v}_{L}\end{matrix}\right]$ ${W}_{L}^{′} \left({u}_{L}′,{v}_{L}′\right) \to W ′ \left(X′,Y′,Z′\right) = \left[\begin{matrix}- 1 \\ {u}_{L} + {du}_{L} \\ {v}_{L} + {dv}_{L}\end{matrix}\right]$

The points are then projected on the rendered frame G using the projection of the front face: ${Proj}_{front} \left(\left[\begin{matrix}X \\ Y \\ Z\end{matrix}\right]\right) = \left[\begin{matrix}X \\ \overline{Y} \\ Z \\ \overline{Y}\end{matrix}\right]$ $V ′ \left(X, Y, Z\right) \to {V}_{F} " \left(x, y\right) = {Proj}_{front} \left(V′\right) = \left[\begin{matrix}\frac{- 1}{{u}_{L}} \\ \frac{{v}_{L}}{{u}_{L}}\end{matrix}\right]$ $W ′ \left(X′,Y′,Z′\right) \to {W}_{F} " \left(x, y\right) = {Proj}_{front} \left(W′\right) = \left[\begin{matrix}\frac{- 1}{{u}_{L} + {du}_{L}} \\ \frac{{v}_{L} + {dv}_{L}}{{u}_{L} + {du}_{L}}\end{matrix}\right]$ ${dV}_{F} " = {W}_{F} " - {V}_{F} " = \left[\begin{matrix}\frac{{du}_{L}}{\left({u}_{L}+{du}_{L}\right) {u}_{L}} \\ \frac{{v}_{L} {du}_{L} - {u}_{L} {dv}_{L}}{{u}_{L} \left({u}_{L}+{du}_{L}\right)}\end{matrix}\right]$

The projected motion vector predictor is applied at the point P of the front face: ${dP}_{F} " = {dV}_{F} " = \left[\begin{matrix}{du}_{F} \\ {dv}_{F}\end{matrix}\right] = \left[\begin{matrix}\frac{{du}_{L}}{\left({u}_{L}+{du}_{L}\right) {u}_{L}} \\ \frac{{v}_{L} {du}_{L} - {u}_{L} {dv}_{L}}{{u}_{L} \left({u}_{L}+{du}_{L}\right)}\end{matrix}\right]$

It is to be noted that, as in the sphere case, some cases are singular (generally when the predictor or the vector target are closed to the origin of the coordinate system). A practical implementation would limit the effect of division by the factor *u(u*+*du)* by putting a limit on the minimum absolute value of the vector.

Following the embodiment described in figure 7 for adaptating the motion vector predictor, the case of a short focal length video is discussed here. A classical model for distortion is to use the Brown-Conrady model where the 2D+3D distortions are merged into a simple 2D function: (xd,yd) = g(xu,yu,S), where (xd,yd) is the pixel coordinate after distortion (in frame F) and (xu,yu) is the pixels coordinate before distortion (in frame G). The distortion function g() is the composition: g= f⁻¹ o 3d⁻¹ o proj⁻¹ . The distortion function g() may be obtained using Brown-Conrady model.

The function g⁻¹ can be recovered from g, usually as an offline process where a pixel is mapped to a corresponding undistorted pixel, and apply to the above embodiments. The inverse function g⁻¹ may not always be analytically invertible and can be found using numerical methods or using an LUT.

The embodiment for adapting a motion vector predictor for a current block BLK to encode have been disclosed above considering a point P rerpesentative of the current block BLK to encode. For instance, the point P could be the center of the current block BLK, or the pixel at the top-left corner of block BLK, or any other point for block BLK. The adapted motion vector predictor obtained is then used for coding the whole block BLK.

However, as the motion field in the 2D picture F is distorted, it could be more suitable to deduce an adaptated motion vector predictor per pixel or pixel group (for instance 4x4 pixels subblock in the case of an HEVC standard) of the current block BLK for coding such block. Another embodiment of the present principle is thus to derive an adapted motion vector predictor for each subblock of the current block BLK. A subblock of the current block BLK may comprise one or more pixels of the block BLK.

In another embodiment illustrated in figure 12A, an adapted motion vector predictor dP_{sb} is derived for each subblock of the current block BLK by applying to each subblock the method for adapting the motion vector predictor dV according to any embodiment disclosed with figures 7 or 11. According to this embodiment, the point P of the embodiments disclosed with figures 7 or 11 thus corresponds to a reprensative point of the subblock currently processed, e.g. the center of the subblock.

In another embodiment illustrated in figure 12B, the adapted motion vector predictor dP is first computed according to any embodiment disclosed with figures 7 or 11 for the current block BLK using a point P representative of the current block, P could be for instance the center of the block BLK. Then, an adapted motion vector predictor dP_{sb} is deduced for each subblock of the block using the adapted motion vector predictor dP obtained for the block BLK. For instance, an adapted motion vector predictor dP_{sb} for a subblock can be derived by applying the method disclosed according to any embodiment disclosed with figures 7 or 11 to the subblock and using the adapted motion vector prediction dP of the current block BLK as the initial motion vector predictor dV.

According to these embodiments, at least one adapted motion vector predictor is assigned to each subblock of the current block. Depending on the rate/distortion optimization performed at the encoder, each subblock can then be coded independently using its adapted motion vector predictor. Or, the current block BLK can be coded using all the adapted motion vector predictors of the subblock by computing a motion-compensation prediction block of the current block using a motion-compensation of each subblock with its assigned adapted motion vector predictor.

The present principle of adapting a motion vector predictor has been disclosed above for a motion predictor of a spatial neighbor block of the current block (top, left or top-left neighbor). Such principle can be applied in a similar manner to a motion vector predictor of a temporal neighbor of the current block, i.e. a co-located block of a previous or next 2D picture of the video sequence.

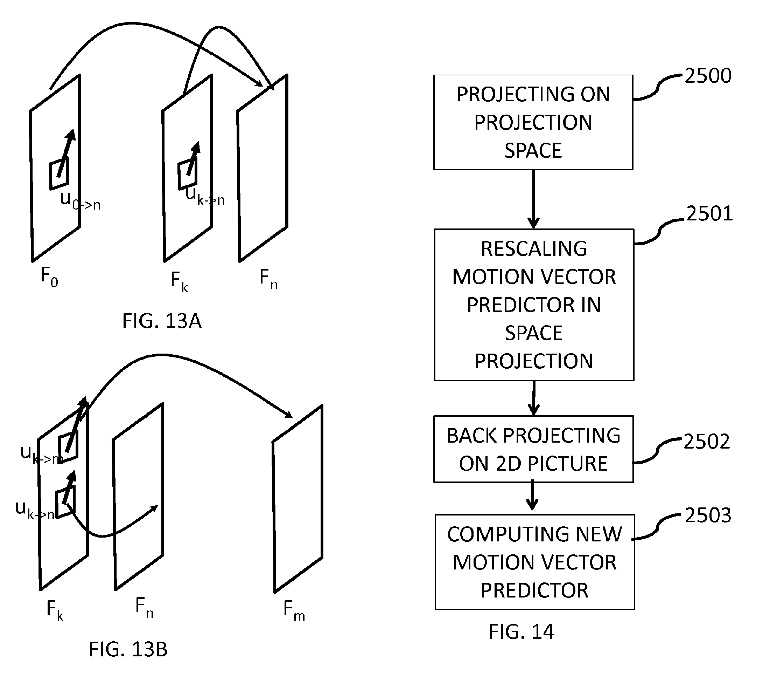

For a temporal motion predictor computation, classically the motion vector predictor u_{0→n} of a co-located block from frame F₀ is rescaled to form a new motion vector predictor u_{k→n} for the current block from frame Fₖ, as shown on figure 13A, by a factor αₜ, with ${α}_{t} = \frac{{t}_{n} - {t}_{k}}{{t}_{n} - {t}_{0}} ,$ where tₙ, tₖ and to are respectively the display time of frame Fₙ, Fₖ and F₀.

In a similar manner, when the motion vector of a spatial neighbor block and the motion vector of the current block do not use the same reference frame, a reference frame adaptation rescaling should be performed for rescaling the motion vector u_{0→n} of the spatial neighbor to form a new motion vector predictor u_{k→n} for the current block, as shown on figure 13B. Classically, if the motion vector predictor u_{0→n} of the neighboring block use a different reference picture (Fₘ on figure 13B) as the reference picture of the current block (Fₙ on figure 13B), then the motion vector predictor u_{0→n} is rescaled with a factor αₛ, with ${α}_{s} = \frac{{t}_{n} - {t}_{k}}{{t}_{m} - {t}_{k}} ,$ where tₙ, tₖ and tₘ are respectively the display time of frame Fₙ, Fₖ and Fₘ.

In order to improve the rescaling methods discussed above, such rescaling could be perfomed in the 3D space or on the rendered frame G so as to take into account the distortion introduced in the motion field by the projection function.

Figure 14 illustrates a flow diagram for an exemplary method for adapting a motion vector predictor according to another embodiment of the present disclosure. Such method can be performed once the adapted motion vector predictor dP has been obtained according to any embodiment disclosed with figures 7 or 11. The method can also be performed in the same time as adapting the motion vector predictor according to any embodiment disclosed with figures 7 or 11.

In the embodiment disclosed below, we denote P a point representative of the current block BLK, and dP₁ the motion vector predictor to rescale. Here, the motion vector predictor to rescale dP₁ is the motion vector predictor dP after rectification according to any embodiments disclosed with figures 7 or 11.

In this embodiment, the rescaling is done by projecting the motion vector predictor on the 3D surface (using Eq 1b), rescaling, and then going back to the 2D picture F. For temporal rescaling we use the factor αₜ and for spatial rescaling αₛ.

In step 2500, the point Q corresponding to the displaced point P with motion vector dP₁ is projected on the 3D surface using the projection function f by Q'=f(P+dP₁)=f(Q).

In step 2501, the motion vector predictor dP' being the difference between the location of Q' and P' (dP'=Q'-P') is rescaled using the factor αᵢ by dP'₂= αᵢ dP'.

In step 2502, the point Q₂' corresponding to the point P' displaced by the motion vector dP2': Q₂'=P'+dP₂'=P'+αᵢ dP'. Then, the point Q₂' is projected back on the 2D picture by: Q₂=f⁻¹(Q₂').

In a step 2503, the rescaled adapted motion vector predictor dP₂ is then computed as the difference between the location of Q₂ and P, as dP₂=Q₂-P.

The rescaling has been disclosed above in the case of the projection on the 3D surface. According to another embodiment, the rescaled adapted motion vector predictor dP₂ can be obtained in the case of the projection on the rendered frame G using the point P", Q" instead of points P' and Q' and the transformation function T and T⁻¹ disclosed earlier.

The above embodiments have been disclosed in the case where the motion vector predictor is rescaled after rectification according to any embodiments disclosed with figures 7 or 11. Accoridng to another embodiment, such rescaling can be performed when performing the rectification of the motion vector predictor according to any embodiments disclosed with figures 7 or 11. In that case, only step 2501 of figure 14 is performed in addition to the steps disclosed with figures 7 or 11.

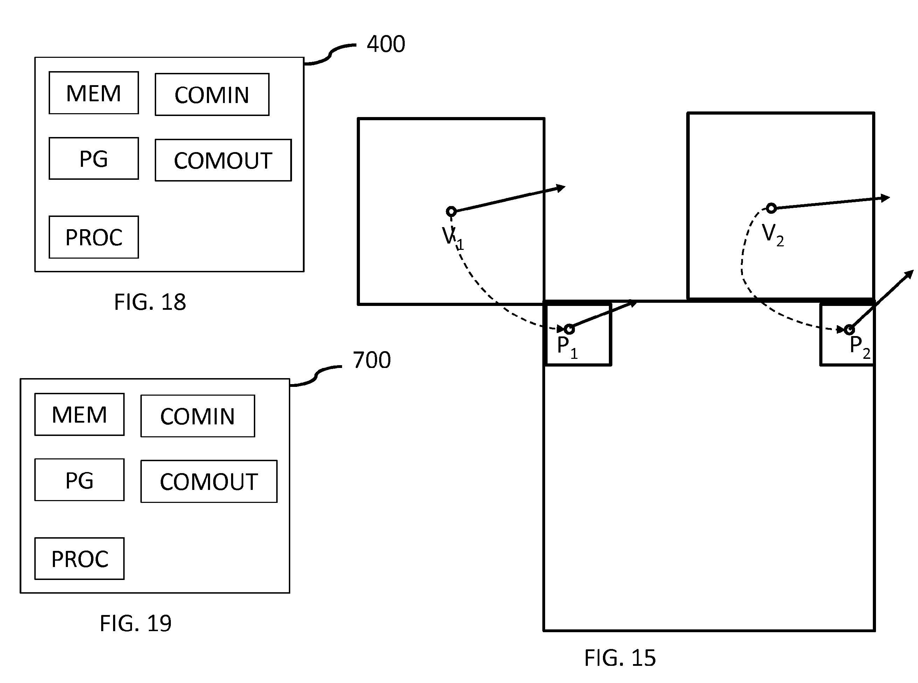

According to another embodiment, in case of an affine motion compensation model used for predicting the current block BLK, 2 motion vectors at P₁ and P₂ are used to derived the affine motion of the current block BLK as shown on figure 15. These motion vectors are predicted using candidates motion vector predictors from the surrounding blocks.

The different embodiments of the method for adapting the motion vector predictor disclosed above can be applied to the motion vector predictors of these surrounding blocks. According to this embodiment, when a method adapting the motion vector predictor as disclosed above is applied, the motion vector predictor dVᵢ at point Vᵢ is used to predict the motion vector dPᵢ at the point Pᵢ instead of using the center of the current block. Here P₁ and P₂ denote respectively the center of the top-left subblock, respectively top-right subblock of the current block.

In the embodiments disclosed above, as the projection between the surface representing the omnidirectional video and the 2D picture and the corresponding inverse projection is fixed and known to the encoded and the decoder, for instance the projection function may be coded in the bitstream, Eq. (1) or Eq. (2) can be pre-computed for individual pixels of the 2D picture, for example as a LUT giving the transformation to apply for each pixel or pixel group to go back and forth between the frame F and G, or in the case of the approximate version (Eq. (1b)) between the frame F and the surface S.

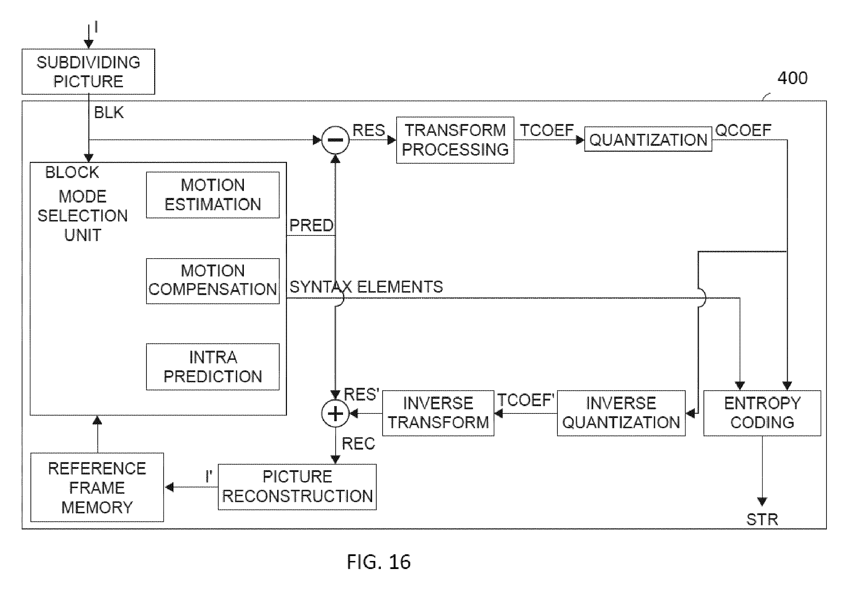

Figure 16 is a schematic block diagram illustrating an exemplary video encoder 400. Such a video encoder 400 performs the encoding into a bitstream of a set of pictures representative of a projection of an omnidirectional video, according to an embodiment of the present principle. The video encoder 400 is disclosed as conforming to an HEVC coder, however the present principle may apply to any 2D video coding schemes processing video as a sequence of 2D pictures.

Classically, the video encoder 400 may include several modules for block-based video encoding, as illustrated in figure 16. A 2D picture I representative of a projected picture from an omnidirectional video to be encoded is input to the encoder 400.

Firstly, a subdividing module divides the picture I into a set of blocks of pixels.

The encoding process described below processes each block BLK of the picture I. Depending on the video coding standard used, such a block BLK may correspond to an H.264/AVC macroblock, or an HEVC coding tree unit, or any subblock from one of the units described above, or any other layout of subdivision of picture I.

The encoding and decoding processes described below are for illustration purposes. According to some embodiments, encoding or decoding modules may be added, or removed or may vary from the following modules. However, the principle disclosed herein could still be applied to these embodiments.

The encoder 400 performs encoding of each block BLK of the picture I as follows. The encoder 400 comprises a mode selection unit for selecting a coding mode for a block BLK of a picture to be coded, e.g. based on a rate/distorsion optimization. Such a mode selection unit comprising:
- a motion estimation module for estimating motion between one current block of the picture to be coded and reference pictures,
- a motion compensation module for predicting the current block using the estimated motion,
- an intra prediction module for spatially predicting the current block.

The mode selection unit may also decide whether subdivision of the block is needed according to rate/distorsion optimization for instance. In that case, the mode selection unit then operates for each subblock of the block BLK.

In case of inter-prediction of the current block BLK, the mode selection unit may performs the method for adapting the motion vector predictor of a neighbor block of the current block BLK according to any embodiments of the present principle disclosed above. In case of several motion vector predictors available, for instance in case the current block has several neighbor block available such as left block, top block or top-left block, each motion vector predictors available for coding the current block BLK is adapted as described above. An adapted motion vector predictor is then obtained for each available motion vector predictor. The resulting adapted motion vector predictors are then used in a classical way as motion vector predictor for the current block BLK.

For instance, an adapted motion vector predictor dP for the current block BLK may be used for predicting a motion vector mv estimated for the current block BLK by computing a motion vector residue as a difference between mv and dP. The motion vector residue is then encoding by the entropy coding module.

According to another embodiment, a motion vector predictor list is build for predicting the motion vector estimated for the current block BLK. A motion vector predictor is then selected from this list and data is coded into the bitstream for indicating the motion vector predictor selected to the decoder. In order to reduce the coding cost of such data, a pruning adaptation of the list is perfomed. During this pruning adaptation, some motion vectors are removed from the list if they are equal to a motion vector already in the list.

According to this embodiment, the comparison of the motion vectors of the list is performed after the rectification of the motion vector predictors according to any embodiments disclosed above.

The adapted motion vector predictor dP may also be used for predicting the current block BLK by motion-compensating the current block BLK in a 2D reference frame representative of a reference surface of the omnidirectional video, for computing a prediction block residue for the block BLK.

Once a coding mode or coding modes is/are selected for the current block BLK, the mode selection unit delivers a predicted block PRED and corresponding syntax elements to be coded in the bitstream for performing the same block prediction at the decoder. When the current block BLK has been split, the predicted block PRED is formed by the set of predicted subblocks delivered by the mode selection unit for each subblocks.

A residual block RES is then obtained by substracting the predicted block PRED from the original block BLK.

The residual block RES is then transformed by a transform processing module delivering a transform block TCOEF of transformed coefficients. In case, the transform processing module operates on transform blocks of size smaller than the residual block RES, the transform processing module delivers a set of corresponding transform blocks TCOEF. For instance, a rate/distorsion optimization may be performed to decide whether large transform block or smaller transform block should be used. In case of an HEVC coder, the transform processing module operates on block called transform unit (TU).

Each delivered transform block TCOEF is then quantized by a quantization module delivering a quantized transform block QCOEF of quantized residual transform coefficients.

The syntax elements and quantized residual transform coefficients of the block QCOEF are then input to an entropy coding module to deliver the coded video data of the bistream STR.

The quantized residual transform coefficients of the quantized transform block QCOEF are processed by an inverse quantization module delivering a block TCOEFF' of unquantized transform coefficients. The block TCOEF' is passed to an inverse transform module for reconstructing a block of residual prediction RES'.

A reconstucted version REC of the block BLK is then obtained by adding the prediction block PRED to the reconstructed residual prediction block RES'. The reconstructed block REC is stored in memory for later use by a picture recontruction module for reconstructing a decoded version I' of the picture I. Once all the blocks BLK of the picture I have been coded, the picture reconstruction module performs reconstruction of a decoded version I' of the picture I from the reconstructed blocks REC. Optionnally, deblocking filtering may be applied to the reconstructed picture I' for removing blocking artifacts between reconstructed blocks.

Once the reconstructed picture I' has been reconstructed and eventually deblocked, the resulting reconstructed picture is then added to a reference picture memory for later use as a reference picture for encoding the following pictures of the set of pictures to code.

The bistream generated from the above-described encoding process is then transmitted over a data network or stored on a memory for immersive rendering of an omnidirectional video decoded from the bistream STR.

Any one of the embodiment of the methods disclosed above can be implemented in an exemplary decoder for decoding a bistream representative of an omnidirectional video, such as disclosed below, according to an embodiment of the present disclosure.

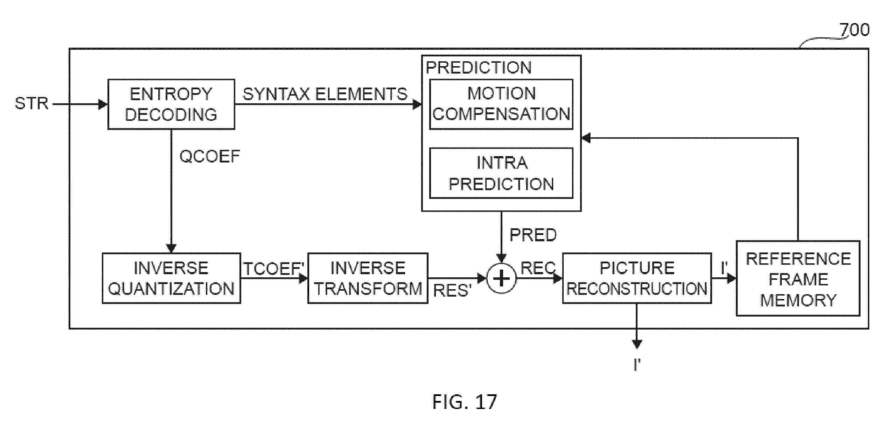

Figure 17 is a schematic block diagram illustrating an exemplary video decoder method adapted to decode a bistream encoded using the present principle. A bitstream STR representative of coded pictures representative of a projection of an omnidirectional video onto said 2D picture comprises coded data representative of at least one current block BLK of said 2D picture. Such a current block may have been coded according to an embodiment of the present disclosure.

According to an embodiment, the bistream STR may also comprise coded data representative of an item of information relating to the projection function.

The video decoder 700 disclosed herein performs the decoding of the pictures according to an HEVC video coding standard. However, the present principle could easily be applied to any video coding standards

The video decoder 700 performs the reconstruction of the omnidirectional video by decoding from the bitstream the coded pictures on a picture-by-picture basis and by decoding each picture on a block-by-block basis. According to the video compression scheme used, parallel processing may be used for decoding the bistream either on a picture basis or on a block basis. A picture I' is thus reconstructed from the compressed bistream as follows.

The coded data is passed to the video decoding modules of the video decoder 700 for reconstructing the blocks of the picture I'.

As illustrated in figure 17, coded data is passed to an entropy decoding module that performs entropy decoding and delivers a block QCOEF of quantized transform coefficients to an inverse quantization module and syntax elements to a prediction module.

After entropy decoding, the block QCOEF of quantized transform coefficients is inverse quantized by the inverse quantization module to deliver a block TCOEF' of dequantized transform coefficients.

The block TCOEF' of dequantized transform coefficients is inverse transformed by an inverse transform module delivering a residual prediction block RES'.

The prediction module builds a prediction block PRED according to the syntax element and using a motion compensation module if a current block has been inter-predicted or an intra prediction module if the current block has been spatially predicted.

In case of inter-prediction of the current block BLK, the prediction module may performs the method for adapting the motion vector predictor of a neighbor block of the current block BLK according to any embodiments of the present principle disclosed above. In case of several motion vector predictors available, for instance in case the current block has several neighbor blocks available such as left block, top block or top-left block, each motion vector predictors available for coding the current block BLK is adapted as described above. An adapted motion vector predictor is then obtained for each available motion vector predictor. The resulting adapted motion vector predictors are then used in a classical way as motion vector predictors for the current block BLK.

For instance, an adapted motion vector predictor dP for the current block BLK may be used for reconstructing a motion vector mv for the current block BLK by adding a motion vector residue decoded from the biststream to the adapted motion vector predictor dP.

According to another embodiment, a motion vector predictor list is build for predicting the motion vector estimated for the current block BLK. A motion vector predictor is then selected from this list and data is coded into the bitstream for indicating the motion vector predictor selected to the decoder. In order to reduce the coding cost of such data, a pruning adaptation of the list is perfomed. During this pruning adaptation, some motion vectors are removed from the list if they are equal to a motion vector already in the list.

According to this embodiment, the comparison of the motion vectors of the list is performed after the rectification of the motion vector predictors according to any embodiments disclosed above.

The adapted motion vector predictor dP may also be used for predicting the current block BLK by motion-compensating the current block BLK in a 2D reference frame representative of a reference surface of the omnidirectional video, for computing a prediction block residue for the block BLK.

The adapted motion vector predictor dP may also be used for predicting the current block BLK. The prediction block PRED may be computed by motion-compensating the current block BLK in a 2D reference frame representative of a reference surface of the omnidirectional video using the adapted motion vector predictor.

A reconstucted block REC is then obtained by adding the prediction block PRED to the reconstructed residual prediction block RES'. The reconstructed block REC is stored in memory for later use by a picture recontruction module for reconstructing a decoded picture I'. Once all the blocks of the picture I have been decoded, the picture reconstruction module performs reconstruction of the decoded picture I' from the reconstructed blocks REC. Optionnally, deblocking filtering may be applied to the reconstructed picture I' for removing blocking artifacts between reconstructed blocks.

The reconstructed picture I' is then added to a reference picture memory for later use as a reference picture for decoding the following pictures of the set of pictures to decode.

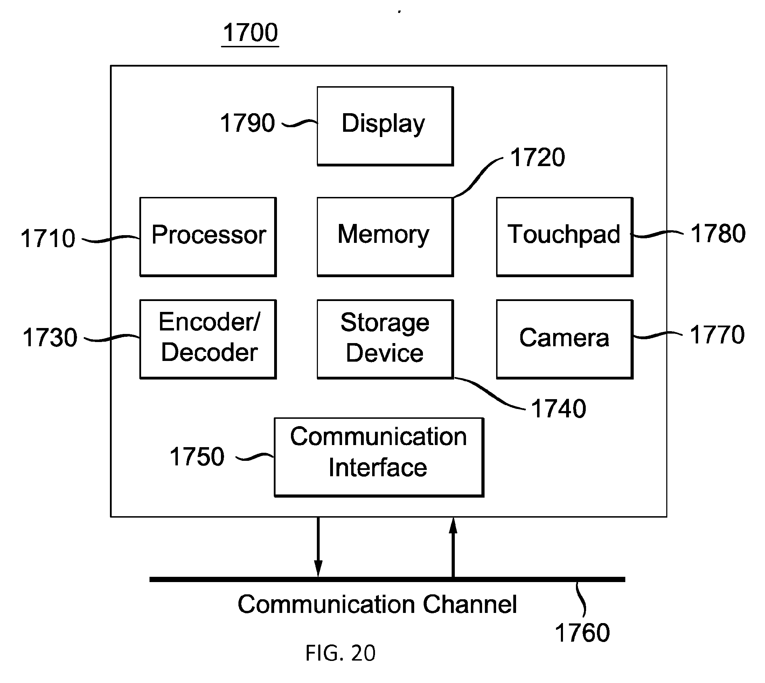

The recontructed picture I' is then stored on a memory or output by the video decoder apparatus 700 to an immersive rendering device (1810) as disclosed below with figure 20. The video decoder apparatus 700 may also be comprised in the immersive rendering device (1810). In that case, the reconstructed picture I' is output by the decoder apparatus to a display module of the immersive rendering device (1810).

According to the immersive rendering system implemented, the disclosed decoder apparatus may be comprised in any one of the processing devices of an immersive rendering system such as disclosed herein for instance, in a computer (1840), or a game console, or a smartphone, or an immersive rendering device (1810), or an immersive wall.

The apparatus decoder 700 may be implemented as hardware or software or a combination of hardware and software thereof.

Figure 18 illustrates the simplified structure of an apparatus (400) for coding an omnidirectional video according to an embodiment. Such an apparatus is configured to implement the method for coding an omnidirectional video according to the present principle which has been described here above.

According to an embodiment, the encoder apparatus comprises a processing unit PROC equipped for example with a processor and driven by a computer program PG stored in a memory MEM and implementing the method for coding an omnidirectional video according to the present principles.

At initialization, the code instructions of the computer program PG are for example loaded into a RAM (not shown) and then executed by the processor of the processing unit PROC. The processor of the processing unit PROC implements the steps of the method for coding an omnidirectional video which have been described here above, according to the instructions of the computer program PG.

The encoder apparatus comprises a communication unit COMOUT to transmit an encoded bitstream STR to a data network.

The encoder apparatus also comprises an interface COMIN for receiving a picture to be coded or an omnidirectional video to encode.

Figure 19 illustrates the simplified structure of an apparatus (700) for decoding a bitstream representative of an omnidirectional video according to an embodiment. Such an apparatus is configured to implement the method for decoding a bistream representative of an omnidirectional video according to the present principle, which has been described here above.

According to an embodiment, the decoder apparatus comprises a processing unit PROC equipped for example with a processor and driven by a computer program PG stored in a memory MEM and implementing the method for decoding a bistream representative of an omnidirectional video according to the present principles.

At initialization, the code instructions of the computer program PG are for example loaded into a RAM (not shown) and then executed by the processor of the processing unit PROC. The processor of the processing unit PROC implements the steps of the method for decoding a bistream representative of an omnidirectional video which has been described here above, according to the instructions of the computer program PG.

The apparatus may comprise a communication unit COMOUT to transmit the reconstructed pictures of the video data to a rendering device.

The apparatus also comprises an interface COMIN for receiving a bistream STR representative of the omnidirectional video to decode from a data netwrok, or a gateway, or a Set-Top-Box.

The apparatus 400 and 700 may be located at separate devices, or in the same device that acts as both a receiver and transmitter.

Figure 20 illustrates a block diagram of an exemplary system 1700 in which various aspects of the exemplary embodiments of the present principles may be implemented. System 1700 may be embodied as a device including the various components described below and is configueured to perform the processes described above. Examples of such devices, include, but are not limited to, HMDs, personal computers, laptop computers, smartphones, tablet computers, digital multimedia set top boxes, digital television receivers, personal video recording systems, connected home appliances, and servers. System 1700 may comprise sensors, and may be communicatively coupled to other similar systems via a communication channel as shown in figure 20 and as known by those skilled in the art to implement the exemplary video system described above.

The system 1700 may include at least one processor 1710 configured to execute instructions loaded therein for implementing the various processes as discussed above. Processor 1710 may include embedded memory, input output interface and various other circuitries as known in the art. The system 1700 may also include at least one memory 1720 (e.g., a volatile memory device, a non-volatile memory device). System 1700 may additionally include a storage device 1740, which may include non-volatile memory, including, but not limited to, EEPROM, ROM, PROM, RAM, DRAM, SRAM, flash, magnetic disk drive, and/or optical disk drive. The storage device 1740 may comprise an internal storage device, an attached storage device and/or a network accessible storage device, as non-limiting examples. System 1700 may also include an encoder/decoder module 1730 configured to process data to provide an encoded video or decoded video.

Encoder/decoder module 1730 represents the module(s) that may be included in a device to perform the encoding and/or decoding functions. Encoder 400 and decoder 700 may be used in encoder/decoder module 1730. As is known, a device may include one or both of the encoding and decoding modules. Additionally, encoder/decoder module 1730 may be implemented as a separate element of system 1700 or may be incorporated within processors 1710 as a combination of hardware and software as known to those skilled in the art.

System 1700 may further include a display (1790) or may be communicatively coupled to the display via the communication channel. The display is, for example of OLED or LCD type. The display can also be an immersive (projective) wall, which is usually of a huge size.

System 1700 may further comprise a touch surface 1780 (e.g. a touchpad or a tactile screen) and a camera 1770. Processor 1710 may process signals received from sensors, which may or may not be part of system 1700. Some of the measurements from sensors can be used to compute the pose of system 1700 or of another device connected to system 1700. Camera 1770 may capture images of the environment for image processing. Processor 1710 may also perform the pre-processing and post-processing functions as described in figure. 1.

Program code to be loaded onto processors 1710 to perform the various processes described hereinabove may be stored in storage device 1740 and subsequently loaded onto memory 1720 for execution by processors 1710. In accordance with the exemplary embodiments of the present principles, one or more of the processor(s) 1710, memory 1720, storage device 1740 and encoder/decoder module 1730 may store one or more of the various items during the performance of the processes discussed herein above, including, but not limited to the input video, the bitstream, equations, formula, matrices, variables, operations, and operational logic.

The system 1700 may also include communication interface 1750 that enables communication with other devices via communication channel 1760. The communication interface 1750 may include, but is not limited to a transceiver configured to transmit and receive data from communication channel 1760. The communication interface may include, but is not limited to, a modem or network card and the communication channel may be implemented within a wired and/or wireless medium. The various components of system 1700 may be connected or communicatively coupled together using various suitable connections, including, but not limited to internal buses, wires, and printed circuit boards.

The exemplary embodiments according to the present principles may be carried out by computer software implemented by the processor 1710 or by hardware, or by a combination of hardware and software. As a non-limiting example, the exemplary embodiments according to the present principles may be implemented by one or more integrated circuits. The memory 1720 may be of any type appropriate to the technical environment and may be implemented using any appropriate data storage technology, such as optical memory devices, magnetic memory devices, semiconductor-based memory devices, fixed memory and removable memory, as non-limiting examples. The processor 1710 may be of any type appropriate to the technical environment, and may encompass one or more of microprocessors, general purpose computers, special purpose computers and processors based on a multi-core architecture, as non-limiting examples.

Various methods are described above, and each of the methods comprises one or more steps or actions for achieving the described method. Unless a specific order of steps or actions is required for proper operation of the method, the order and/or use of specific steps and/or actions may be modified or combined.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation" of the present principles, as well as other variations thereof, mean that a particular feature, structure, characteristic, and so forth described in connection with the embodiment is included in at least one embodiment of the present principles. Thus, the appearances of the phrase "in one embodiment" or "in an embodiment" or "in one implementation" or "in an implementation", as well any other variations, appearing in various places throughout the specification are not necessarily all referring to the same embodiment. Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, processing the information, transmitting the information, moving the information, copying the information, erasing the information, calculating the information, determining the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

## Claims

1. A method for video encoding, said method comprising, for at least one current block of a picture:
adjusting (1600) at least one motion vector predictor for said current block, based on a relation between a first format in which the picture is represented and a second format in which the picture is to be rendered; and
encoding (1601) said current block using said adjusted motion vector predictor.

2. A method for decoding a video, said method comprising, for at least one current block of a picture:
adjusting (1602) at least one motion vector predictor for said current block, based on a relation between a first format in which the picture is represented and a second format in which the picture is to be rendered; and
decoding (1603) said current block using said adjusted motion vector predictor.

3. An apparatus for video encoding, said apparatus comprising, for at least one current block of a picture:
means for adjusting at least one motion vector predictor for said current block based on a relation between a first format in which the picture is represented and a second format in which the picture is to be rendered; and
means for encoding said current block using said adjusted motion vector predictor.

4. An apparatus for decoding a video, said apparatus comprising, for at least one current block of a picture:
means for adjusting at least one motion vector predictor for said current block based on a relation between a first format in which the picture is represented and a second format in which the picture is to be rendered; and
means for decoding said current block using said adjusted motion vector predictor.

5. A method according to claim 1 or 2, or an apparatus according to claim 3 or 4 wherein said relation between said first format and said second format is determined according to a look-up table comprising correspondances between motion vectors for a plurality of locations in said first format in which said picture is represented and motion vectors in a plurality of corresponding locations in said second format in which the picture is to be rendered.

6. A method according to any one of claims 1, 2 or 5, or an apparatus according to any one of claims 3 to 5, wherein said picture is representative of a projection of a 3D surface representative of said video, and wherein said relation between said first format and said second format uses at least said projection of said omnidirectional video onto said picture.

7. A method according to any one of claims 1, 2, 5 or 6, or an apparatus according to any one of claims 3 to 6, wherein the adjusting at least one motion vector predictor for said current block comprises:
computing in a projection space a displacement of at least one point of said current block using said motion vector predictor, obtaining a displaced point in the projection space;
projecting onto the picture said displaced point; and
computing said adjusted motion vector predictor as a difference between a location on the picture of said projected displaced point and said point of said current block.

8. A method according to claim 7, wherein said motion vector predictor is a motion vector from a block in said picture, and wherein the adjusting at least one motion vector predictor for said current block further comprises:
applying said motion vector predictor to an anchor point of said picture for obtaining a displaced anchor point;
projecting onto said projection space, said point of said current block, said anchor point and said displaced anchor point; and
computing in said projection space, a projected motion vector predictor as a difference between said projected displaced anchor point and said projected anchor point, computing in said projection space a displacement of at least one point of said current block being performed using said projected motion vector predictor.

9. A method according to claim 7 or 8, or an apparatus according to claim 7 or 8 wherein said projection space is a local rendered frame being a local plane tangent to the 3D surface or said projection space corresponds to the 3D surface representative of said video.

10. A method according to any one of claims 2 or 5 to 9, or an apparatus according to any one of claims 4 to 9 wherein said current block is partitionned into subblocks comprising one or more pixels, and wherein decoding said current block using said adjusted motion vector predictor comprises:
computing a motion vector for each subblock of the current block using said adjusted motion vector predictor; and
decoding each subblock of said current block using said motion vector computed for each subblock.

11. A method according to claim 2, or a device according to claim 4 wherein said current block is partitionned into subblocks comprising one or more pixels, and wherein said adjusting one motion vector predictor for said current block and said decoding are performed for each subblock of said current block using said motion vector predictor, delivering for each subblock of said current block an adjusted motion vector predictor.

12. A computer program comprising software code instructions for performing the methods according to any one of claims 1 -2 or 5- 11, when the computer program is executed by a processor.

13. An immersive rendering device comprising an apparatus for decoding a bitstream representative of a video according to any one of claims 4 to 12

14. A system for immersive rendering of a video encoded into a bistream, comprising at least:
a network interface (600) for receiving said bistream from a data network;
an apparatus (700) for decoding said bitstream according to any one of claims 4 to 12; and
an immersive rendering device (900).

15. A bitstream representative of a coded video comprising:
coded data representative of at least one block of a picture of said video; and
coded data representative of a look-up table comprising correspondances between pixels in a first format in which said picture is represented and pixels in a second format in which the picture is to be rendered, for adjusting at least one motion vector predictor for said at least one block.
